# EUROPEAN PATENT SPECIFICATION

(11) **EP 2 977 836 B1**
(45) Date of publication and mention of the grant of the patent: **29.03.2017**
(21) Application number: 15178033.5
(22) Date of filing: 23.07.2015
(51) Int. Cl.: G04R 20/04

(54) **SATELLITE SIGNAL RECEIVING DEVICE, ELECTRONIC TIMEPIECE, AND CONTROL METHOD OF A SATELLITE SIGNAL RECEIVING DEVICE**
SATELLITENSIGNALEMPFANGSVORRICHTUNG, ELEKTRONISCHE UHR UND STEUERUNGSVERFAHREN EINER SATELLITENSIGNALEMPFANGSVORRICHTUNG
DISPOSITIF DE RÉCEPTION DE SIGNAL SATELLITE, PIÈCE D'HORLOGERIE ÉLECTRONIQUE ET PROCÉDÉ DE CONTRÔLE D'UN DISPOSITIF DE RÉCEPTION DE SIGNAL SATELLITE

(30) Priority: 25.07.2014 JP 2014151948
(43) Date of publication of application: 27.01.2016
(73) Proprietor: Seiko Epson Corporation, Shinjuku-ku Tokyo 163-0811 (JP)
(72) Inventor: Baba, Norimitsu, Nagano, 392-8502 (JP)
(74) Representative: Hoffmann Eitle

(56) References cited:
- EP-A1- 1 783 512
- EP-A2- 2 503 413
- CN-A- 102 354 101
- US-A1- 2011 181 467
- US-A1- 2011 187 589
- US-A1- 2013 051 185

## Description

### BACKGROUND

### 1. Technical Field

The present invention relates to a satellite signal receiving device that receives satellite signals transmitted from positioning information satellites, to an electronic timepiece, and to a control method of a satellite signal receiving device.

### 2. Related Art

According to US 2011/187589 A1, each of a first and a second navigation satellite system are adapted to operate according to a first and a second specification, respectively, and each includes a first and a second plurality of satellite vehicles, respectively.

EP 1 783 512 A1 discloses a RF receiver for GNSS signals composed of a single chip and a low number of external components, that has a number of independent signal paths each including a separate IF stage and baseband down-converter.

US 2013/051185 A1 discloses an electronic timepiece that can adjust the input terminal and suppress power consumption.

Navigation satellite systems that receive navigation signals (satellite signals) transmitted from multiple navigation satellites with a satellite receiver, and measure the current location of the receiver, for example, are known from the literature. There are four global navigation satellite systems (GNSS) that are currently in operation or expected to come be in service soon, the GPS (Global Positioning System), GLONASS (Global Navigation Satellite System), Galileo, and BeiDou. When all of these systems are working, more than 100 navigation satellites will be in use. Regional navigation satellite systems including QZSS (Quasi-Zenith Satellite System) and IRNSS (Indian Regional Navigational Satellite System) are also planned.

Most receivers for receiving navigation satellite signals today only receive signals transmitted from navigation satellites in the GPS system, the first operational system, but receivers that can simultaneously receive both GPS signals and GLONASS signals have been proposed. See, for example, Japanese translation of PCT international application JP-T-2013-518281.

However, the receiver described in JP-T-2013-518281 simultaneously receives both GPS signals and GLONASS signals, the corresponding circuits operate simultaneously to run the signal reception process, and current consumption increases accordingly. As a result, when the size and capacity of the battery used to power the device is limited, as in small electronic devices such as wristwatches, battery voltage drops quickly and the system can stop operating when both signals are received simultaneously.

Both signals can be received simultaneously if a high capacity battery is used, but this also increases the size of the electronic device. This reduces the practical utility of wristwatches and other small electronic devices.

### SUMMARY

The problem of the invention is solved by the independent claims. Advantageous embodiments are described in the dependent claims.

A satellite signal receiving device, electronic timepiece, and control method of a satellite signal receiving device according to the example enable receiving satellite signals from multiple navigation satellite systems even in small electronic devices.

A satellite signal receiving device according to one example has a first reception unit that receives satellite signals transmitted from a first type of positioning information satellite, and a second reception unit that receives satellite signals transmitted from a second type of positioning information satellite, and operates the first reception unit and second reception unit exclusively of each other.

Because the first reception unit and the second reception unit operate exclusively of each other in the example, they do not function simultaneously. As a result, peak current consumption can be reduced compared with a device that receives GPS signals and GLONASS signals simultaneously as described in JP-T-2013-518281. Battery capacity can therefore be reduced and a physically smaller battery can be used than with the device described in JP-T-2013-518281, and small electronic devices, such as wristwatches, capable of receiving satellite signals from plural different navigation satellite systems can be provided.

Furthermore, because satellite signals from plural types of positioning information satellites, such as GPS and GLONASS, can be received, signals can be received from more positioning information satellites than when satellite signals from only one type of positioning information satellite can be received. As a result, the likelihood of being able to lock onto a positioning information satellite can be improved even in locations with limited exposure to open sky, such as in urban canyons surrounded by tall buildings. The possibility of being able to receive satellite signals and calculate the time information and positioning information from the acquired navigation data message can therefore be improved.

A satellite signal receiving device according to another example has a first reception unit that receives satellite signals transmitted from a first type of positioning information satellite, and a second reception unit that receives satellite signals transmitted from a second type of positioning information satellite, and the first reception unit and second reception unit function sequentially.

Because the first reception unit and the second reception unit operate sequentially in the example, they do not function simultaneously. As a result, peak current consumption can be reduced compared with a device that receives GPS signals and GLONASS signals simultaneously as described in JP-T-2013-518281. Battery capacity can therefore be reduced and a physically smaller battery can be used than with the device described in JP-T-2013-518281, and small electronic devices, such as wristwatches, capable of receiving satellite signals from plural different navigation satellite systems can be provided.

Furthermore, because satellite signals from plural types of positioning information satellites, such as GPS and GLONASS, can be received, signals can be received from more positioning information satellites than when satellite signals from only one type of positioning information satellite can be received. As a result, the likelihood of being able to lock onto a positioning information satellite can be improved even in locations with limited exposure to open sky, such as in urban canyons surrounded by tall buildings. The possibility of being able to receive satellite signals and calculate the time information and positioning information from the acquired navigation data message can therefore be improved.

Note that the reception units functioning sequentially means that the reception processes of the reception units do not start at the same time, and instead start at different times. As a result, the satellite search function of the second reception unit can be executed after the satellite search function is executed by the first reception unit, the timing when current consumption by each reception unit peaks can be offset, and the peak current can therefore be reduced.

In a satellite signal receiving device according to another example, a positioning information satellite of the first type is a GPS satellite; and a positioning information satellite of the second type is a GLONASS satellite or BeiDou satellite.

By combining GPS satellites and GLONASS satellites or BeiDou satellites, the possibility of being able to lock onto a positioning information satellite is improved around the world. More specifically, because GLONASS satellites or BeiDou satellites are easier to lock onto than GPS satellites at high latitudes and in specific regions, combining satellites from such different systems can improve the possibility of being able to lock onto satellites in more locations.

In a satellite signal receiving device according to another example, a positioning information satellite of the first type is a GPS satellite and a quasi-zenith satellite; and a positioning information satellite of the second type is a GLONASS satellite or BeiDou satellite.

By combining GPS satellites and quasi-zenith satellites with GLONASS satellites or BeiDou satellites, the possibility of being able to lock onto a positioning information satellite is improved around the world. More specifically, because GLONASS satellites or BeiDou satellites are easier to lock onto than GPS satellites at high latitudes and in specific regions, combining satellites from such different systems can improve the possibility of being able to lock onto satellites in more locations. In addition to GPS satellites, quasi-zenith satellites are also used as positioning information satellites of the first type. Quasi-zenith satellites broadcast the same signals on the same frequency as GPS satellites, and can QZSS signals can be received by the same reception unit. As a result, a separate reception unit is not required to receive QZSS signals, and the possibility of being able to lock onto a satellite can be improved in regions where QZSS signals can be captured, such as in Japan.

A satellite signal receiving device according to another example also has a third reception unit that receives satellite signals transmitted from a third type of positioning information satellite, and the first reception unit, second reception unit, and third reception unit function exclusively or sequentially.

The satellite signal receiving device according to this example has first, second, and third reception units, and can therefore receive satellite signals transmitted from three types of positioning information satellites. The likelihood of being able to reliably lock onto satellites can therefore be improved because three types of satellite signals selected from different Global Navigation Satellite Systems, such as GPS, GLONASS, Galileo, and BeiDou, can be received. Furthermore, because the reception units function exclusively or sequentially, peak current consumption can be reduced, and the satellite signal receiving device can be incorporated into small electronic devices such as wristwatches.

In a satellite signal receiving device according to another example the types of positioning information satellites are positioning information satellites in which at least one of the satellite signal modulation method and the center frequency of the carrier wave is different.

Because separate reception units receive the different satellite signals, satellite signals that differ by either or both the modulation method and center frequency of the carrier wave can therefore be received and processed. When satellite signals that differ by modulation method or the center frequency of the carrier wave are received by a single reception unit, the reception unit cannot be optimized for both satellite signals and current consumption increases. By having discrete reception units, however, this example can optimize the reception process for each satellite signal and reduce current consumption.

In a satellite signal receiving device according to another aspect of the example, each reception unit has a search function that locks positioning information satellites of the corresponding type; and the search function of each reception unit operates exclusively.

Current consumption by the reception unit is greatest during the search process that locks onto the positioning information satellites. Therefore, by exclusively driving at least the search function of each reception unit, the peak current consumption can be reduced, the required battery capacity can be reduced, and the battery size can be reduced. As a result, the satellite signal receiving device can be incorporated into small electronic devices such as wristwatches.

In a satellite signal receiving device according to another example, each reception unit has a tracking function that tracks the satellite signal of a locked positioning information satellite; and each reception unit drives the tracking function exclusively within the period in which one bit of the navigation data message of the satellite signal is transmitted.

By driving the tracking function of each reception unit exclusively during the period when one bit of the navigation data message of the satellite signal is transmitted in the GPS or GLONASS satellite signal, the tracking functions do not operate at the same time and peak current consumption can be reduced. Furthermore, because plural satellite signals are tracked during the transmission period of one bit of the navigation data message of the satellite signal, the navigation data messages from plural satellite signals can be decoded in the data transmission period of one bit, that is, substantially simultaneously.

Peak current consumption can therefore be reduced even if plural types of positioning information satellites are tracked simultaneously. The plural types of satellite signals locked can also be decoded substantially simultaneously, and the reception time can be shortened.

In a satellite signal receiving device according to another example, the current consumption when the reception unit is driven is different for each reception unit.

Current consumption by each reception unit increases as the reception frequency of the satellite signal or the chip rate (code frequency) increases. More specifically, the current consumption of the reception unit differs according to the type of satellite signal received. Because this example has discrete reception units and the current consumption of each reception unit when functioning is different from the other reception units, the current consumption by each reception unit can be set to the minimum current consumption required to receive the corresponding satellite signals.

In a satellite signal receiving device according to another example, the reception units operate sequentially from the reception unit with the lowest current consumption when the reception unit functions.

For example, when the first reception unit and second reception unit function exclusively or sequentially, the first reception unit can be operated first and the second reception unit operated next when current consumption by the first reception unit is lower than the current consumption of the second reception unit. Alternatively, if current consumption by the second reception unit is lower than the current consumption of the first reception unit, the second reception unit can be operated first and the first reception unit operated next.

When there are a first reception unit, second reception unit, and third reception unit, and current consumption increases in the same first, second, third order, the first reception unit can be operated first, the second reception unit operated next, and the third reception unit operated next.

By driving the reception unit with the lowest current consumption first, the likelihood of being able to suppress the amount of current consumed to lock a specific number of satellites can be improved. For example, the current consumption of the satellite search process increases in the order GPS, GLONASS, BeiDou due to frequency differences, for example. As a result, if satellites are searched in the order GPS, GLONASS, BeiDou, there is open access to the sky, and each type of satellite can be locked, the first GNSS search, that is, the search for GPS satellites, may be able to lock onto enough satellites. Therefore, if the satellite search process is stopped when the required number of satellites is locked, the high current consumption search processes for GLONASS satellites and BeiDou satellites will not be executed, and current consumption can be reduced.

In a satellite signal receiving device according to another example, a storage unit that stores the type and number of positioning information satellites locked in the last reception process or the positioning information satellites from which satellite signals were successfully received, and the satellite signal receiving device sets the order for operating the reception units based on the type and number of positioning information satellites stored in the storage unit.

For example, if the region where the satellite signal receiving device is located is the same as during the last reception process, the likelihood of being able to quickly lock onto positioning information satellites of the same type as the last time is increased by first driving the reception unit that receives signals from positioning information satellites of the type that were successfully locked or received in the last reception process. Furthermore, if plural types of positioning information satellites were successfully locked or received the last time, the likelihood of being able to quickly lock onto positioning information satellites of the same type is increased by first driving the reception unit that receives the type of positioning information satellite from which the most signals were locked or received the last time. If the satellite search process is then ended when the required number of satellites is locked, searching for other positioning information satellites is unnecessary and current consumption can be reduced.

In a satellite signal receiving device according to another example, the current consumption of each reception unit is lower when not functioning than when functioning.

Because current consumption is lower when the reception unit is not functioning than when functioning, current can be supplied to some components in an idle state instead of completely stopping operation of the reception unit. By thus setting the reception unit to an idle state when not functioning, high speed processing is possible when returned to the functioning state, and the reception time can be shortened.

In a satellite signal receiving device according to another example, the reception unit searches for and locks onto a positioning information satellite for which the reception level of the satellite signal is greater than or equal to a set threshold; and when searching for all positioning information satellites of plural types, the threshold changes and the positioning information satellite search repeats.

Because this example can search for only positioning information satellites with a satellite signal reception level equal to or exceeding a set threshold, the search time can be shortened. Furthermore, because the threshold is changed and the search repeated when all of plural types of positioning information satellites are searched once and the specific number of satellites cannot be locked, the possibility of being able to lock onto the desired number of satellites can be improved.

Further preferably in this satellite signal receiving device, the reception unit lowers the threshold for each search of all positioning information satellites of plural types.

Because the initial threshold value set to the highest level in this example, the positioning information satellite search process is also shortest during the first iteration of the search process. The reception process can therefore be completed in a short time when the specific number of satellites can be locked using only positioning information satellites with a high signal reception level, such as when there are satellites near the zenith.

Furthermore, because the threshold is lowered and the search repeated when all of plural types of positioning information satellites are searched once and the specific number of satellites cannot be locked, the possibility of being able to lock onto the desired number of satellites can be improved.

In a satellite signal receiving device according to another example, the reception unit ends the search when a specific number of positioning information satellites is locked in the process of searching for plural types of positioning information satellites.

The specific number is set to 1, for example, in the timekeeping reception process that acquires only time information, and the specific number is set to 4, for example, in the positioning reception process that acquires positioning information.

This example stops searching when the specific number of positioning information satellites is locked, and can therefore reduce current consumption compared with continuing the search.

In a satellite signal receiving device according to another example, the reception unit executes a timekeeping reception process of locking and receiving a satellite signal from at least one positioning information satellite, and computing time information based on information acquired from the received satellite signal.

Because this example can search for plural types of positioning information satellites, such as GPS and GLONASS satellites, and there are times when GLONASS satellites can be found but GPS satellites cannot, this example can improve the possibility of being able to lock onto one positioning information satellite and receive satellite signals therefrom. The probability of the timekeeping reception process succeeding can therefore be improved.

In a satellite signal receiving device according to another example, the reception unit can execute a positioning reception process of locking and receiving satellite signals from three or more positioning information satellites and computing positioning information based on information acquired from the received satellite signals, but preferably locks onto four positioning information satellites to calculate the positioning information precisely.

Because this example can search for plural types of positioning information satellites, such as GPS and GLONASS satellites, and there are times when, for example, four GPS satellites cannot be locked but two GPS satellites and two GLONASS satellites can be locked, this example can improve the possibility of being able to lock onto four positioning information satellites and receive satellite signals therefrom. The probability of the positioning reception process succeeding can therefore be improved.

Another example is an electronic timepiece including the satellite signal receiving device described above, and a time display device that displays time information computed based on information acquired from a satellite signal received by the reception unit of the satellite signal receiving device.

By incorporating the satellite signal receiving device according to the example, there are more positioning information satellites from which signals can potentially be received, and the likelihood of being able to successfully receive satellite signals and acquire time information can be improved. Furthermore, because the reception units function exclusively or sequentially, peak current can be reduced, battery size can be reduced, and a wristwatch that can receive satellite signals from plural satellite navigation systems can be easily provided.

An electronic timepiece according to another example preferably also has a display device that displays the type of positioning information satellite locked onto by the satellite signal receiving device.

Thus comprised, the user of the electronic timepiece can easily check the type of positioning information satellites that are locked and better known the reception status.

An electronic timepiece according to another example preferably also has a setting device that sets the type of positioning information satellite searched for by the satellite signal receiving device.

Thus comprised, positioning information satellites can be quickly locked and the reception process completed in a short time because the user of the electronic timepiece can set the type of positioning information satellite to search for based on the current location.

An electronic timepiece according to another example preferably also has a photovoltaic device; and a storage device that stores power produced by the photovoltaic device.

By incorporating a photovoltaic generator, this example eliminates the need to replace a battery and improves user convenience. Furthermore, because the satellite signal receiving device can reduce current consumption during the reception process, the satellite signal receiving device can operate using the power produced by a photovoltaic generator that can be built into a wristwatch.

Another example is a control method of a satellite signal receiving device including a first reception unit that receives satellite signals transmitted from a first type of positioning information satellite, and a second reception unit that receives satellite signals transmitted from a second type of positioning information satellite, the control method including operating the first reception unit and the second reception unit exclusively.

Another example is a control method of a satellite signal receiving device including a first reception unit that receives satellite signals transmitted from a first type of positioning information satellite, and a second reception unit that receives satellite signals transmitted from a second type of positioning information satellite, the control method including operating the first reception unit and second reception unit sequentially.

The control methods of the example have the same operating effect as the satellite signal receiving device described above.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a front view of an electronic timepiece according to the first embodiment of the invention.
FIG. 2 is a section view of a electronic timepiece according to the first embodiment of the invention.
FIG. 3 is a block diagram illustrating the configuration of a electronic timepiece according to the first embodiment of the invention.
FIG. 4 is a block diagram illustrating the configuration of an receiving device according to the first embodiment of the invention.
FIG. 5 is a circuit diagram illustrating the analog processing unit of the receiving device according to the first embodiment of the invention.
FIG. 6 is a block diagram illustrating the configuration of the storage device in an electronic timepiece according to the first embodiment of the invention.
FIG. 7 describes the format of the navigation data message of a GPS satellite signal.
FIG. 8 describes the format of the navigation data message of a GLONASS satellite signal.
FIG. 9 describes the format of strings 1, 4, and 5 in a
   GLONASS signal.
FIG. 10 is a flow chart of the manual reception process in the first embodiment of the invention.
FIG. 11 is a flow chart of the reception process of the first embodiment of the invention.
FIG. 12 describes the timing of the tracking process in the reception process of the first embodiment of the invention.
FIG. 13 is a flow chart of the satellite searching process in the reception process of the first embodiment of the invention.
FIG. 14 illustrates an example of the GPS satellite search process in the satellite search process of the first embodiment of the invention.
FIG. 15 illustrates an example of the GLONASS satellite search process in the satellite search process of the first embodiment of the invention.
FIG. 16 illustrates an example of the relationship between frequency adjustment and the order in which the Doppler frequency changes in the satellite search process of the first embodiment of the invention.
FIG. 17 illustrations the relationship between the sensitivity threshold, search order, and search time in the satellite search process of the first embodiment of the invention.
FIG. 18 is a flow chart describing the reception process in a second embodiment of the invention.
FIG. 19 is a flow chart describing the reception process in a third embodiment of the invention.

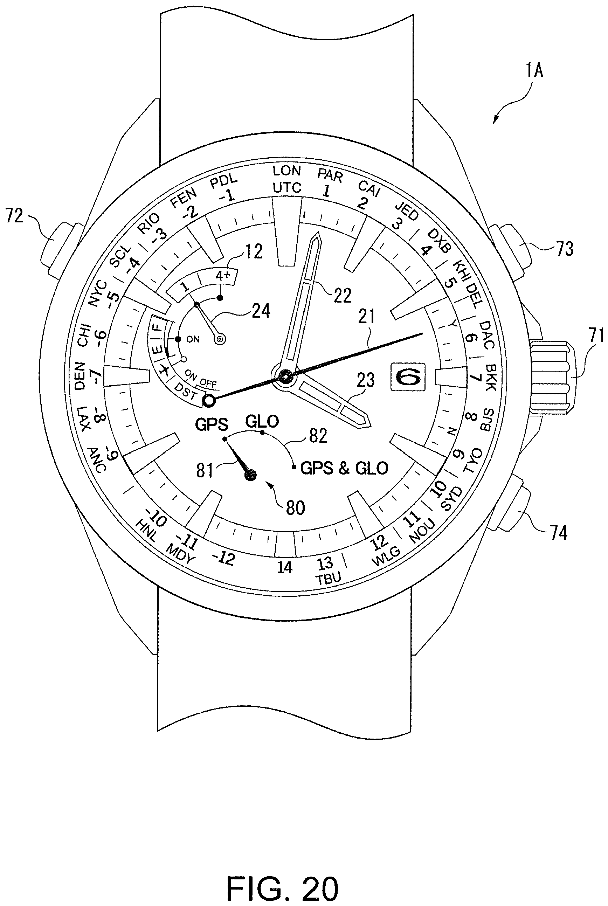

FIG. 20 is a front view of an electronic timepiece according to a fourth embodiment of the invention.
FIG. 21 shows an example of the GPS satellite and quasi-zenith satellite search order in the satellite search process in a fifth embodiment of the invention.
FIG. 22 illustrations the relationship between the sensitivity threshold and search order in another example of the satellite search process.
FIG. 23 shows characteristics of different Global Navigation Satellite Systems.

### DESCRIPTION OF EMBODIMENTS

Preferred embodiments of the present invention are described below with reference to the accompanying figures.

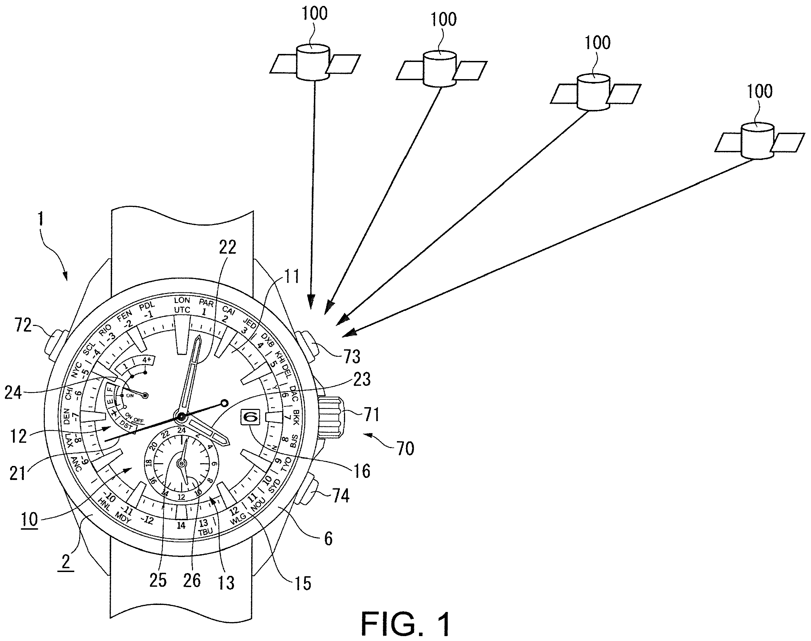

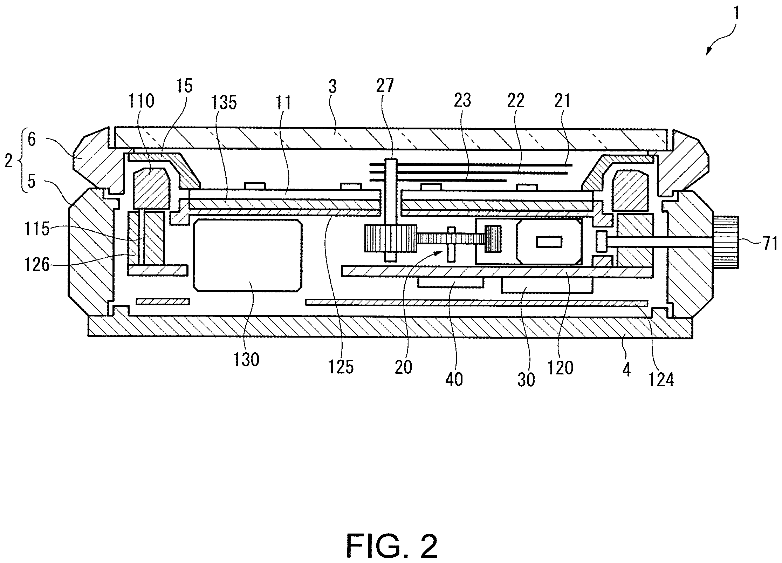

FIG. 1 is a front view of an electronic timepiece 1 according to the first embodiment of the invention, and FIG. 2 is a section view of the electronic timepiece 1.

As shown in FIG. 1, the electronic timepiece 1 described as an example of an electronic device receives a satellite signal from at least one positioning information satellite 100 to generate time information, and receives satellite signals from at least three positioning information satellites 100 to generate positioning information. The positioning information satellites 100 may be in the GPS satellite or GLONASS satellite constellations of multiple satellites orbiting the Earth on specific orbits.

### Electronic timepiece

The electronic timepiece 1 is a wristwatch worn on the user's wrist, and has a display device 10 for displaying the time and an input device 70, which is an external operating member.

### Electronic timepiece construction

The electronic timepiece 1 has an external case 2, crystal 3, and back cover 4.

The external case 2 includes a bezel 6 made of ceramic or metal fit to a cylindrical case member 5 made of metal. Note that reception performance improves when the bezel 6 is ceramic because unlike metal, ceramic does not block radio waves. On the other hand, the production cost can also be reduced when the bezel 6 metal because it is easier to process than ceramic.

Of the two openings in the external case 2, the opening on the face side is covered by the crystal 3 held by the bezel 6, and the opening on the back is covered by the back cover 4, which is metal.

Inside the external case 2 are a dial ring 15 attached to the inside circumference of the bezel 6; an optically transparent dial 11; a center pivot 27 passing through the dial 11; hands 21, 22, 23 attached to the center pivot 27; a an indicator hand 24; subdial hands 25, 26; and a drive mechanism 20 that drives the hands 21, 22, 23, indicator hand 24, and subdial hands 25, 26.

The input device 70 including a crown 71 and three buttons 72, 73, 74 is disposed to the side of the external case 2.

### Display device

The display device 10 includes the dial 11, hands 21, 22, 23, indicator hand 24, subdial hands 25, 26, and a date wheel.

A large part of the dial 11 is made from a non-metallic material (such as plastic or glass) that easily passes light and microwaves in the 1.5 GHz band.

The dial 11 includes a scale 12 corresponding to the indicator hand 24, a subdial 13 corresponding to the subdial hands 25, 26, and a date window 16 through which a date number on the date wheel can be seen.

### Basic timepiece

The hands 21, 22, 23 are disposed on the face side of the dial 11. Hand 21 is the second hand, hand 22 is the minute hand, and hand 23 is the hour hand. A scale (markers) for indicating the time with the hands 21, 22, 23 is disposed to the dial ring 15.

The hands 21, 22, 23, dial 11, and dial ring 15 thus embody a basic analog timepiece for displaying the time. The basic timepiece primarily displays the time at the current location. For example, when the electronic timepiece 1 is used in Honolulu, it displays the current local time in Honolulu. A time display device is thus embodied by the hands 21, 22, 23.

### Indicator dial

The indicator hand 24 is disposed near 10:00 on the face of the dial 11, and indicates various information by pointing to particular positions on the scale 12.

The indicator hand 24 points to DST (daylight saving time) on the scale 12 when daylight saving time is on. By manipulating the input device 70, such as the crown 71 or a button 72, and setting the indicator hand 24 to ON or OFF in the DST range, displaying daylight saving time on the electronic timepiece 1 can be turned on or off.

The airplane icon shown on the scale 12 indicates an airplane mode. By manipulating the input device 70 to set the indicator hand 24 to the airplane icon and selecting the airplane mode, the satellite signal reception function of the electronic timepiece 1 is turned off.

The E and F on the scale 12 indicate the power reserve (remaining battery capacity).

The 1 and 4+ on the scale 12 indicate the reception mode. The indicator hand 24 points to 1 when in the timekeeping mode (time reception process) acquiring time information, and the indicator hand 24 points to 4+ when in the positioning mode (position reception process) acquiring positioning information. The user can therefore know whether the electronic timepiece 1 is in the timekeeping mode or the positioning mode by looking at the scale 12.

### Small clock

The subdial hands 25, 26 are disposed at 6:00 on the face of the dial 11. Hand 25 is the minute hand, and hand 26 is the hour hand. The subdial 13 has a 24-hour scale for displaying the time with the subdial hands 25, 26.

As a result, the subdial hands 25, 26 and subdial 13 embody a small clock for displaying the time. The small clock generally displays the time in a previously set second time zone such as the time at home when travelling (in this example, the time in Japan).

### Dial ring

The dial ring 15 is disposed around the dial 11. The dial ring 15 is made of plastic, for example, and has a flat portion disposed parallel to the crystal 3, and a beveled portion sloping from the inside circumference part of the flat portion down toward the dial 11. The outside edge of the flat part touches the inside circumference of the bezel 6, and the inside edge of the beveled part touches the dial 11. The dial ring 15 is shaped like a ring when seen in plan view, and is conically shaped when seen in section. The flat part and beveled part of the dial ring 15, and the inside circumference surface of the bezel 6, create donut-shaped space inside of which a ring-shaped antenna 110 is housed.

A scale (markers) for indicating the time with the hands 21, 22, 23, numbers for indicating the time difference in the time zone, and letters denoting the name of a city in the time zone, are shown on the dial ring 15.

### Input device

The input device 70 is disposed as an external operating means to the side of the external case 2. The input device 70 includes the crown 71 and three buttons 72, 73, 74. When the input device 70 is manually operated, a process corresponding to the operation is performed.

More specifically, when the crown 71 is pulled out one stop, the second hand 21 points to the currently set time zone. To change the currently set time zone from this position, turning the crown 71 to the right (clockwise) moves the second hand 21 clockwise and advances the time zone setting +1, and turning the crown 71 to the left (counterclockwise) moves the second hand 21 counterclockwise and moves the time zone setting -1. Pushing the crown 71 in sets the selected time zone.

More specifically, the second hand 21 also moves when the crown 71 is turned at the first stop, enabling the user to manually select the time zone by moving the second hand 21 to the time difference or the city name of the desired time zone shown on the dial ring 15.

When the crown 71 is pulled out to the second stop and turned to move the hands 21, 22, 23, the currently displayed time can be adjusted manually.

Pushing the button 72 executes a process appropriate to the current operation, such as cancelling the operating mode or stopping the reception process.

Pushing the button 73 for a first set time (such as greater than or equal to 3 seconds and less than 6 seconds) and then releasing the button 73 manually starts the reception process in the timekeeping mode (manual reception process). During this reception process, the indicator hand 24 points to the 1 on the scale 12 indicating the timekeeping mode.

Pushing the button 73 for a second set time (such as 6 seconds or more) that is longer than the first set time and then releasing the button 73 manually starts the reception process in the positioning mode (manual reception process). During this reception process, the indicator hand 24 points to the 4+ on the scale 12 indicating the positioning mode.

Pushing the button 73 for a short time (such as less than 3 seconds) that is shorter than the first set time and then releasing the button 73 starts the result display process indicating the result of the previous reception process. More specifically, the most recent reception process is displayed by the indicator hand 24 pointing to 1 or 4+. The reception result is indicated by the second hand 21 pointing to Y (reception success) or N (reception failure) . Note that the Y is at the 12 second position, and the N is at the 18 second position in this embodiment of the invention.

The processes executed when the buttons 72, 73, 74 are pressed are not limited to the foregoing, and may be set appropriately according to the functions of the electronic timepiece 1.

### Solar panel

A solar panel 135, which is a photovoltaic power generator, is disposed between the dial 11 and a main plate 125 to which the drive mechanism 20 is disposed. The solar panel 135 is a round flat panel having plural solar cells (photovoltaic devices) that convert light energy to electrical energy (power) connected in series. The solar panel 135 also has a sunlight detection function. A through-hole through which the center pivot 27 passes, and an aperture for a date window 16, are formed in the dial 11, solar panel 135, and main plate 125.

### Drive mechanism

The drive mechanism 20 is disposed to the main plate 125, and is covered by a circuit board 120 from the back side. The drive mechanism 20 includes a stepper motor that drives the second hand 21, a stepper motor that drives the minute hand 22 and the hour hand 23, a stepper motor that drives indicator hand 24, and a stepper motor that drives subdial hands 25, 26.

Because the electronic timepiece 1 has a date wheel that displays the date in the date window 16, the electronic timepiece 1 also has a stepper motor that drives the date wheel.

### Circuit board

The circuit board 120 has a reception device (receiver module) 30 as the satellite signal receiving device, and a control device 40. A circuit cover 124 is disposed on the side of the circuit board 120 to which the reception device 30 is disposed (the back cover 4 side), and covers these components.

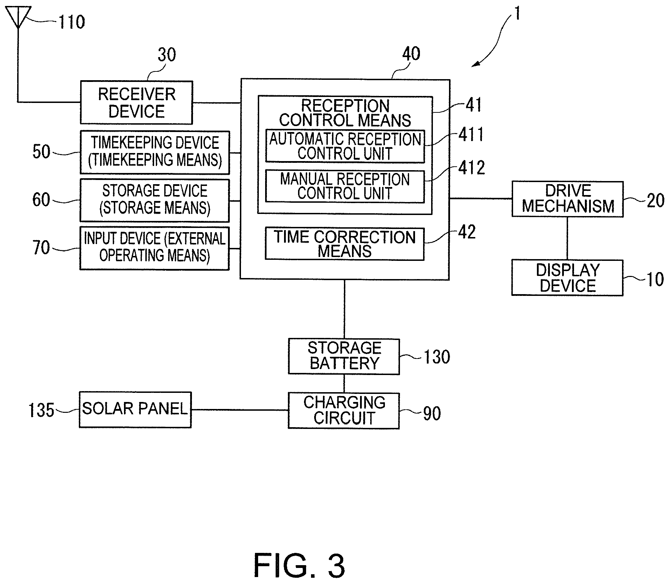

A lithium ion battery or other type of storage battery 130 is disposed between the ground plate 125 and the back cover 4. The storage battery 130 is a storage device that is charged through a charging circuit 90 (see FIG. 3) with power produced by the solar cell 135.

Note that space for placing the storage battery 130 in the external case 2 is provided in the circuit cover 124. An annular main plate support ring 126 is disposed between the circuit board 120 and antenna 110.

### Antenna

The antenna 110 is made by forming a metal antenna pattern by plating or a silver paste printing process on a ring-shaped dielectric substrate. The antenna 110 is disposed around the outside of the dial 11 on the inside circumference of the bezel 6, is covered by the plastic dial ring 15 and the crystal 3, and can therefore assure good reception. The dielectric can be made by mixing titanium oxide or other dielectric material that can be used at high frequencies with resin, which combined with the wavelength shortening effect of the dielectric can achieve a smaller antenna. The antenna is not limited to a ring antenna as used in this embodiment, and may be a patch antenna, for example.

The ring antenna 110 is fed through a feed node, and an antenna connection pin 115 disposed on the back side of the ring antenna 110 is connected to this feed node. The antenna connection pin 115 is a pin-shaped connector made of metal, is disposed passing through the main plate support ring 126, and contacts the circuit board 120. As a result, the circuit board 120 and the antenna 110 inside the storage space are connected by the antenna connection pin 115.

### Circuit configuration of the electronic timepiece

FIG. 3 is a block diagram illustrating the circuit configuration of the electronic timepiece 1. The electronic timepiece 1 includes a reception device 30, control device 40, timekeeping device 50 (timekeeping means), storage device 60 (storage means), and input device 70 (external operating means).

The control device 40 includes a reception control means 41 and time correction means 42. The reception control means 41 includes an automatic reception control unit 411 and a manual reception control unit 412.

### Reception device

The reception device 30 is a load that is driven by power stored in the storage battery 130, and when driven by the control device 40, receives satellite signals transmitted from a positioning information satellite 100 through the ring antenna 110. When satellite signal reception is successful, the reception device 30 sends the acquired information, such as the orbit information and time information, to the control device 40. If satellite signal reception fails, the reception device 30 sends a failure report to the control device 40.

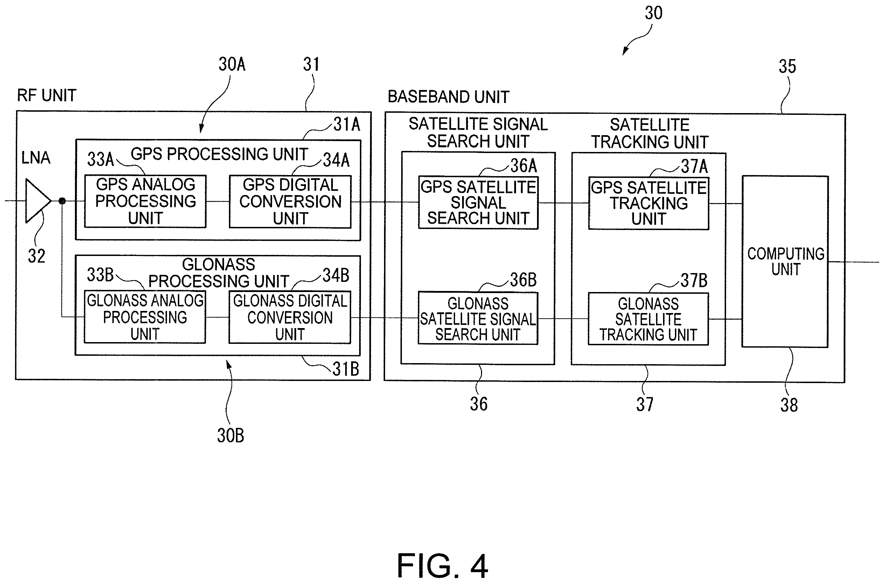

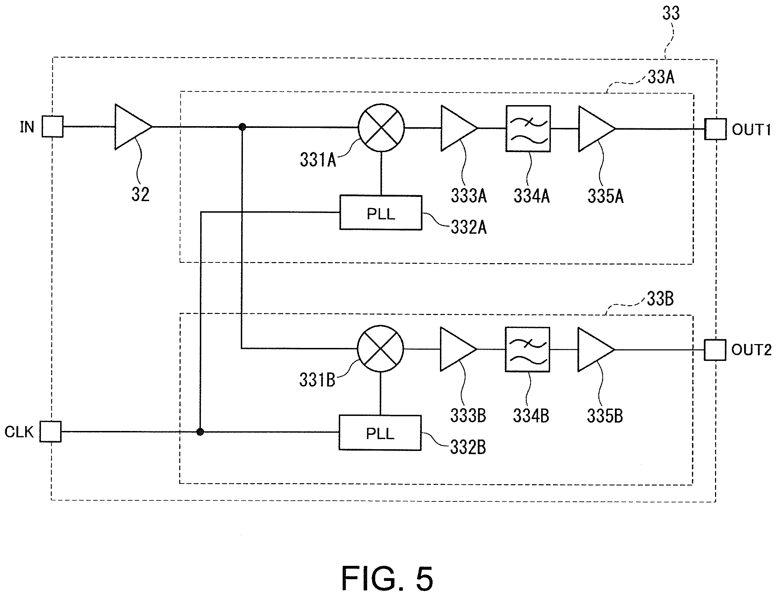

The receiver device 30 is described in detail below with reference to FIG. 4 and FIG. 5.

As shown in FIG. 4, the receiver device 30 includes an RF (radio frequency) unit 31 that receives and converts satellite signals transmitted from positioning information satellites 100 (FIG. 1) to digital signals, and a baseband unit 35 that correlates the received signals and demodulates the navigation data message. Note that the receiver device 30 in this embodiment of the invention uses GPS satellites as a first type of positioning information satellite, GLONASS satellites as a second type of positioning information satellite, and can receive satellite signals transmitted from these two types of positioning information satellites.

### RF unit

The RF unit 31 includes a low noise amplifier (LNA) 32 that amplifies satellite signals received through the antenna 110, and a GPS processing unit 31A and GLONASS processing unit 31B to which the satellite signals amplified by the LNA 32 are input.

The GPS processing unit 31A has a GPS analog processing unit 33A that processes GPS satellite signals (analog signals) received from GPS satellites, and a GPS digital conversion unit 34A, which is an analog/digital converter (ADC) for converting the analog signals processed by the GPS analog processing unit 33A to digital signals.

The GLONASS processing unit 31B has a GLONASS analog processing unit 33B that processes GLONASS satellite signals (analog signals) received from GLONASS satellites, and a GLONASS analog processing unit 33B, which is an analog/digital converter (ADC) for converting the analog signals processed by the GLONASS analog processing unit 33B to digital signals.

### Baseband unit

The baseband unit 35 includes a satellite signal search unit 36, satellite tracking unit 37, and computing unit 38.

The satellite signal search unit 36 includes a GPS satellite signal search unit 36A and a GLONASS satellite signal search unit 36B.

The satellite tracking unit 37 includes a GPS satellite tracking unit 37A and a GLONASS satellite tracking unit 37B.

### Circuits of the analog processing unit

The circuit design of the GPS analog processing unit 33A and GLONASS analog processing unit 33B is described next with reference to FIG. 5. Note that the LNA 32, GPS analog processing unit 33A, and GLONASS analog processing unit 33B embody the analog processing unit 33 of the RF unit 31. The input node IN of the analog processing unit 33 is connected to the antenna 110 from which satellite signals are input; and a TCXO (temperature-compensated crystal oscillator) is connected to the clock signal input node CLK (not shown in the figure) to which a reference clock signal of a substantially constant frequency regardless of temperature is input.

The GPS analog processing unit 33A includes a mixer 331A, PLL circuit 332A, IF amplifier 333A, IF filter 334A, and IF amplifier 335A.

The GLONASS analog processing unit 33B likewise includes a mixer 331B, PLL circuit 332B, IF amplifier 333B, IF filter 334B, and IF amplifier 335B.

Each PLL circuit 332A, 332B has a VCO (voltage controlled oscillator), and generates and outputs a local frequency signal using the reference clock signal input from the clock signal input pin CLK.

The GPS analog processing unit 33A and GLONASS analog processing unit 33B function exclusively as described further below. More specifically, while the GPS analog processing unit 33A is functioning (operating), the GLONASS analog processing unit 33B is held in a non-functioning state. While the GLONASS analog processing unit 33B is functioning (operating), the GPS analog processing unit 33A is held in a non-functioning state. Therefore, that the GPS analog processing unit 33A and GLONASS analog processing unit 33B function exclusively means that the GPS analog processing unit 33A and GLONASS analog processing unit 33B do not function simultaneously. This includes not only when the GPS analog processing unit 33A and GLONASS analog processing unit 33B alternately function continuously, but also when one of the GPS analog processing unit 33A and GLONASS analog processing unit 33B functions and then the other functions after waiting a period in which neither functions.

Note that the current supply may be stopped when the GPS analog processing unit 33A and GLONASS analog processing unit 33B are not functioning, but to enable them to operate quickly when restored to the functioning state, the IF amplifier 333A, 335A, IF amplifier 333B, 335B are preferably held in an idle state with current supplied thereto. Because the GPS analog processing unit 33A and GLONASS analog processing unit 33B in the non-functioning or idle state are substantially stable at a current level that is low compared with when they are operating, current consumption will not increase and require a high capacity battery even when one of the GPS analog processing unit 33A and GLONASS analog processing unit 33B is operating and the other is not (is idle).

After being amplified by the LNA 32, the satellite signal received through the antenna 110 is processed by the GPS analog processing unit 33A or the GLONASS analog processing unit 33B.

While the GPS analog processing unit 33A is functioning, the satellite signal amplified by the LNA 32 is mixed by the mixer 331A with the local frequency signal output by the PLL circuit 332A, and down-converted to an intermediate frequency (IF) signal. The IF signal mixed by the mixer 331A passes the IF amplifier 333A, IF filter 334A, and IF amplifier 335A, and is output from the output node OUT1 of the GPS analog processing unit 33A to the GPS digital conversion unit 34A.

The GPS digital conversion unit 34A converts the IF signal output from the GPS analog processing unit 33A to a digital signal.

While the GLONASS analog processing unit 33B is functioning, the satellite signal amplified by the LNA 32 is mixed by the mixer 331B with the local frequency signal output by the PLL circuit 332B, and down-converted to an intermediate frequency (IF) signal. The IF signal mixed by the mixer 331B passes the IF amplifier 333B, IF filter 334B, and IF amplifier 335B, and is output from the output node OUT2 of the GLONASS analog processing unit 33B to the GLONASS digital conversion unit 34B.

The GLONASS digital conversion unit 34B converts the IF signal output from the GLONASS analog processing unit 33B to a digital signal.

In this embodiment of the invention the GPS processing unit 31A and GLONASS processing unit 31B are independent of each other. More specifically, the carrier frequency of GPS satellite signals is 1575.42MHz, while the frequency of GLONASS signals is centered on 1602.0MHz. Efficient processing is therefore enabled by using separate analog processing units 33A and 33B for GPS satellite signals and GLONASS satellite signals.

### Baseband unit configuration

While not shown in the figures, the hardware configuration of the baseband unit 35 includes a DSP (digital signal processor), CPU (central processing unit), SRAM (static random access memory), RTC (real-time clock). The satellite signal search unit 36, satellite tracking unit 37, and computing unit 38 described above are embodied by the cooperation of the hardware and software.

As described above, the baseband unit 35 includes a satellite signal search unit 36 that runs a satellite signal search process, a satellite tracking unit 37 that tracks the positioning information satellites 100, and a computing unit 38 that decodes and acquires information from the received satellite signals, extracts time information from the decoded information, and calculates the current position.

### Satellite signal search unit

As shown in FIG. 4, the satellite signal search unit 36 includes a GPS satellite signal search unit 36A and GLONASS satellite signal search unit 36B.

In the GPS satellite search process, the GPS satellite signal search unit 36A produces a local code of the same pattern as each C/A code, and runs a process that correlates the local code with the C/A code included in the baseband signal. The GPS satellite signal search unit 36A adjusts the timing for generating the local code to find the peak correlation between the C/A code and local code, and when this correlation exceeds a specific threshold, determines the local code is synchronized with the GPS satellite signal (that is, determines a lock with the GPS satellite transmitting the signal).

Note that the GPS system uses a CDMA (Code Division Multiple Access) method whereby all GPS satellites transmit on the same frequency with each satellite using a different C/A code. Therefore, a GPS satellite that can be locked onto can be found (searched) by detecting the C/A code contained in the received satellite signal. More specifically, GPS satellites can be found by executing a correlation process using a pseudorandom noise code (PRN) set individually for each GPS satellite.

This embodiment of the invention uses a sliding correlation technique as the correlation method, which is executed primarily by the DSP.

GLONASS satellite signals are transmitted using a FDMA (Frequency Division Multiple Access) method. As a result, the GLONASS satellite signal search unit 36B divides the frequency band at a specific frequency interval to create multiple channels. The GLONASS satellite signal search unit 36B therefore changes between the channels to find a satellite signal.

### Satellite tracking unit

When the user wearing the electronic timepiece 1 is walking, the electronic timepiece 1 with the receiver device 30 is also moving, and because the positioning information satellites 100 are travelling at high speed, the input phase of the satellite signals is constantly changing. To track these changes, the satellite tracking unit 37 receives satellite signals from the locked positioning information satellite 100 by running the correlation process continuously to find the peak correlation value using the local code.

Because the number of chips in the C/A code is different in GPS signals and GLONASS signals, the tracking processes also differ. As a result, both a GPS satellite tracking unit 37A and a GLONASS satellite tracking unit 37B are used to execute separate tracking processes.

Because the modulation method used for GPS satellite signals and the modulation method used for GLONASS signals are different, the satellite signal search unit 36 and satellite tracking unit 37 operate using a GPS satellite signal search unit 36A and GPS satellite tracking unit 37A for GPS signals, and a separate GLONASS satellite signal search unit 36B and GLONASS satellite tracking unit 37B for GLONASS signals.

### Computing unit

To decode signals, the computing unit 38 demodulates the navigation data message of the positioning information satellite 100 that is locked and tracked, and generates positioning information (positioning data) and time information (time data) from the satellite information including the orbit information and time information contained in the navigation data message. The computing unit 38 then outputs the generated time data and location data to the control device 40.

The CPU of the baseband unit 35 controls operation of the RF unit 31 and baseband unit 35 appropriately to the reception mode.

More specifically, to find a GPS signal, the baseband unit 35 causes the GPS processing unit 31A (GPS analog processing unit 33A and GPS digital conversion unit 34A) of the RF unit 31, and the GPS satellite signal search unit 36A of the baseband unit 35, to function (operation).

To find a GLONASS signal, the baseband unit 35 causes the GLONASS processing unit 31B (GLONASS analog processing unit 33B and GLONASS digital conversion unit 34B) of the RF unit 31, and the GLONASS satellite signal search unit 36B of the baseband unit 35, to function (operation). These parts therefore operate exclusively and do not operate at the same time.

The receiver device 30 in this embodiment of the invention therefore has a GPS reception unit 30A as a first reception unit that receives satellite signals from GPS satellites as a first satellite type using primarily the GPS satellite signal search unit 36A and GPS satellite tracking unit 37A.

The receiver device 30 also has a GLONASS reception unit 30B as a second reception unit that receives satellite signals from GLONASS satellites as a second satellite type using primarily the GLONASS satellite signal search unit 36B and GLONASS satellite tracking unit 37B.

The GPS reception unit 30A and GLONASS reception unit 30B function exclusively of each other.

### Timekeeping device

The timekeeping device 50 has a crystal oscillator that is driven by power stored in the storage battery 130, and updates the time data using a reference signal based on the oscillation signal from the crystal oscillator.

### Storage device

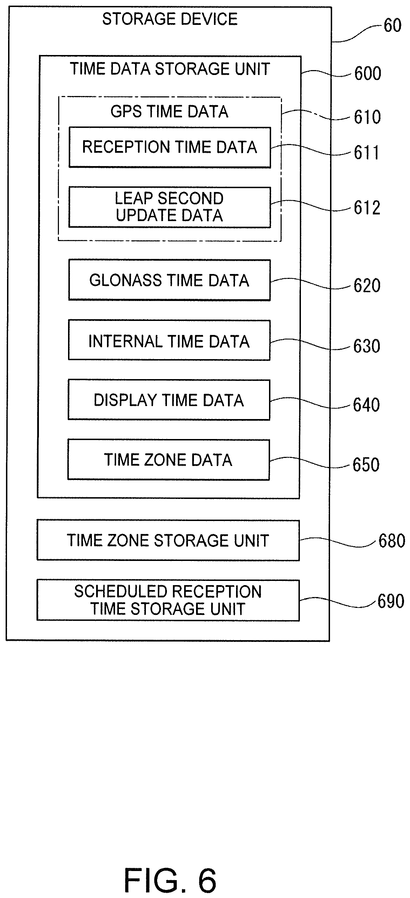

As shown in FIG. 6, the storage device 60 includes a time data storage unit 600, time zone storage unit 680, and a scheduled reception time storage unit 690.

The time data storage unit 600 stores GPS time data 610 acquired from the GPS satellite signal, GLONASS time data 620 acquired from GLONASS satellite signals, internal time data 630, display time data 640, and time zone data 650.

The GPS time data 610 includes reception time data 611, and leap second update data 612.

The reception time data 611 stores the time information (GPS time) acquired from GPS satellite signals. The leap second update data 612 stores at least the current leap second data. More specifically, data related to the leap second, that is, the current leap second value, the week number of the leap second event, the day number of the leap second event, and the future leap second value, is stored on page 18 in subframe 4 of the GPS satellite signal. Of these values, at least the current leap second value is stored in the leap second update data 612.

The GLONASS time data 620 stores the time information (GLONASS time) acquired from the GLONASS satellite signal. Note that the GLONASS time information is UTC, and contains leap second information. As a result, there is no need to separately store leap second data as there is with GPS time.

The internal time data 630 contains internal time information. This internal time information is updated by the time data newly updated by the reception process based on the acquired GPS time data 610 or GLONASS time data 620. More specifically, when the GPS satellite signal is received and the reception time data 611 updated, the internal time data 630 is updated based on the GPS time stored in the reception time data 611 and the current leap second stored in the leap second update data 612. When the GLONASS satellite signal is received and the GLONASS time data 620 updated, the internal time data 630 is updated based on the GLONASS time stored in the GLONASS time data 620. In this event, the internal time data 630 is updated to UTC.

The internal time data 630 is normally updated every second by the timekeeping device 50, but when a satellite signal is received and the time information acquired, the internal time data 630 is updated based on the acquired time information. The internal time data 630 therefore stores the current UTC.

The display time data 640 stores the time obtained by adding the time zone data (time difference information) for the time zone data 650 to the internal time information of the internal time data 630. The time zone data 650 is set either by the user manually selecting and setting the time zone, or based on the positioning information acquired by reception in the positioning mode.

The time zone storage unit 680 relationally stores the positioning information (latitude and longitude) and time zone (time difference information). As a result, when positioning information is acquired in the positioning mode, the control device 40 can acquire the time zone data based on the positioning information (latitude and longitude).

The time zone storage unit 680 relationally stores the name of a city to the time zone data. Therefore, as described above, when the user selects the name of a city for which the current time is desired by manipulating the crown 71 of the input device 70, for example, the control device 40 searches the time zone storage unit 680 for the city name selected by the user, gets the time zone data related to that city, and sets the time zone data 650.

The scheduled reception time for the automatic reception control unit 411 to run the scheduled reception process is stored in the scheduled reception time storage unit 690. The time when reception initiated by manually operating the pusher 15 was last successful is stored as the scheduled reception time.

Note that orbit information (almanac, ephemeris) for positioning information satellites is not stored in the storage device 60. The electronic timepiece 1 is a wristwatch, the capacity of the storage device 60 is limited, the capacity of the storage battery 130 is also limited, and executing the long reception process required to acquire the orbit information is difficult. The reception process of the electronic timepiece 1 is therefore executed in a cold start mode without locally stored orbit information.

Note that while not shown in the figures, positioning information (latitude and longitude) acquired by the positioning reception process, that is, the current location of the electronic timepiece 1, may be stored.

### Control device

The control device 40 is embodied by the CPU that controls the electronic timepiece 1. The control device 40 includes a reception control means 41 that controls the receiver device 30 and runs the reception process. The reception control means 41 includes an automatic reception control unit 411 and a manual reception control unit 412. The control device 40 has a time correction means 42 that acquires the time information contained in the satellite signal received by the receiver device 30, and corrects the time kept by the internal time data 630 based on the acquired time information.

### Automatic reception control unit

The automatic reception control unit 411 operates the receiver device 30 to run the reception process in the timekeeping mode when the scheduled reception time set in the scheduled reception time storage unit 690 is reached,, and when the output voltage or output current of the solar panel 135 exceeds a set threshold.

More specifically, the automatic reception control unit 411 operates the receiver device 30 when the kept time, and more specifically the internal time data 630, reaches the scheduled reception time stored in the scheduled reception time storage unit 690. This is referred to as the scheduled reception process.

When the output voltage or output current of the solar panel 135 reaches a preset threshold and the electronic timepiece 1 can be determined to be outdoors where the solar panel 135 is exposed to daylight, the automatic reception control unit 411 operates the receiver device 30. Note that the number of times the receiver device 30 executes a process based on the power output state of the solar panel 135 may be limited to once a day, for example.

The automatic reception control unit 411 locks onto at least one positioning information satellite 100 (either GPS satellite or GLONASS satellite) with the receiver device 30, receives a satellite signal transmitted from that positioning information satellite 100, and acquires the time information. The time correction means 42 then corrects the internal time data 630 based on the acquired time information when acquiring the time information is successful.

### Manual reception control unit

The manual reception control unit 412 operates the receiver device 30 and executes the reception process when the user pushes a button 73 of the input device 70 to manually (unconditionally) start the reception process.

In this event, the manual reception control unit 412 selectively executes either the reception process in the timekeeping mode or the reception process in the positioning mode depending on how long the button 73 is pressed as described above.

Like the automatic reception control unit 411, the manual reception control unit 412 locks onto at least one positioning information satellite 100 by the receiver device 30 in the reception process of the timekeeping mode, receives satellite signals transmitted from the positioning information satellite 100, and acquires time information. When acquiring the time information is successful, the time correction means 42 adjusts the internal time data 630 based on the acquired time information.

In the reception process in the positioning mode, the manual reception control unit 412 locks onto at least three, and preferably four or more, positioning information satellites 100 by the receiver device 30. The positioning information satellites 100 maybe the same type of satellite or different types of satellites. The manual reception control unit 412 then receives the satellite signals transmitted from each of the positioning information satellites 100 and acquires time information, and additionally computes and acquires the positioning information. If acquiring the positioning information is successful, the control device 40 acquires the time zone data (time difference information) from the time zone data storage unit 680 based on the acquired positioning information (latitude and longitude) and stores it in the time zone data 650.

For example, because Japan Standard Time (JST) is 9 hours ahead of UTC (UTC + 9), if the positioning information acquired in the positioning mode indicates a location in Japan, the control device 40 reads and stores the time difference (+9 hours) from the time zone data storage unit 680 in the time zone data 650. As a result, the display time data 640 is the time equal to the internal time data 630, which is UTC, plus the time zone data.

### Time correction means

When time information is acquired by the reception control means 41 and the internal time data 630 is updated, the time correction means 42 moves the hands 21, 22, 23 and updates the displayed time based on the display time data 640.

### Navigation message (GPS satellite)

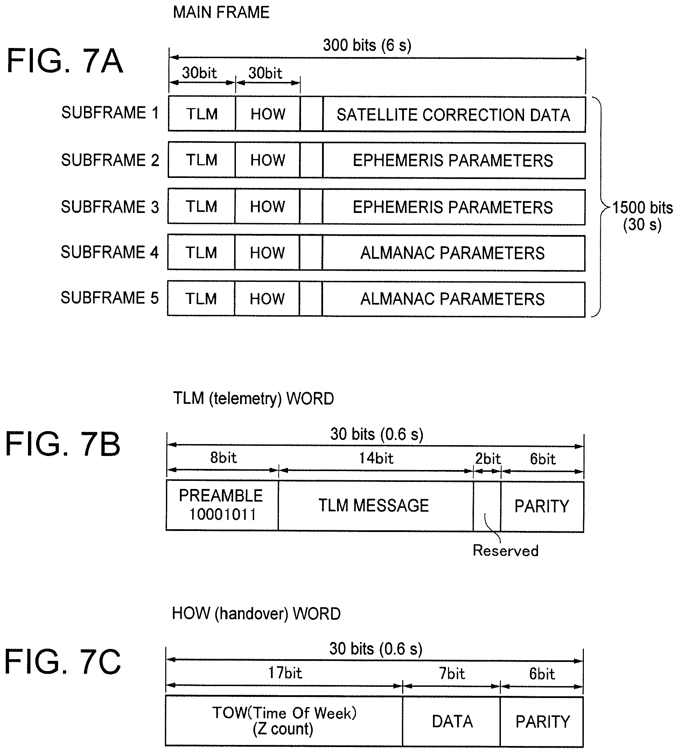

The navigation data message contained in the satellite signals sent from a GPS satellite as the positioning information satellite 100 is described next with reference to FIG. 7. Note that the navigation message is modulated at 50 bps onto the satellite signal carrier.

FIG. 7A to FIG. 7C describe the format of the navigation message.

As shown in FIG. 7A, a navigation message is composed of main frames each containing 1500 bits. Each main frame is divided into five subframes 1 to 5 of 300 bits each. The data in one subframe is transmitted in 6 seconds from each GPS satellite. It therefore takes 30 seconds for the data in one main frame to be transmitted from a GPS satellite.

Subframe 1 contains the week number (WN) and satellite correction data.

The week number identifies the week to which the current GPS time information belongs, and is updated every week.

Subframes 2 and 3 contain ephemeris data (detailed orbit information for each GPS satellite) . Subframes 4 and 5 contain almanac data (coarse orbit information for all GPS satellites 100).

Each of subframes 1 to 5 starts with a telemetry (TLM) word storing 30 bits of telemetry data followed by a HOW word (handover word) storing 30 bits of handover data.

Therefore, while the TLM and HOW words are transmitted at 6-second intervals from the GPS satellites, the week number data and other satellite correction data, ephemeris parameter, and almanac parameter are transmitted at 30-second intervals.

As shown in FIG. 7B, the TLM word contains a preamble, a TLM message and reserved bits, and parity data.

As shown in FIG. 7C, the HOW word contains GPS time information called the TOW or Time of Week (also called the Z count). The Z count denotes in seconds the time passed since 00:00 of Sunday each week, and is reset to 0 at 00:00 Sunday the next week. More specifically, the Z count denotes the time passed from the beginning of each week in seconds. The Z count denotes the GPS time at which the first bit of the next subframe data is transmitted.

The electronic timepiece 1 can therefore acquire date information and time information by retrieving the week number contained in subframe 1 and the HOW word (Z count data) contained in subframes 1 to 5. However, if the week number data was previously received and the time passed from when the week number was acquired is counted internally, the electronic timepiece 1 can know the current week number value of the GPS satellite time without acquiring the week number from a satellite signal again.

The electronic timepiece 1 therefore only needs to acquire the week number value from subframe 1 when week number data (date information) is not already stored internally, such as after a device reset or when the power is first turned on. If the week number is stored, the electronic timepiece 1 can know the current time by simply acquiring the TOW value transmitted every 6 seconds. As a result, the electronic timepiece 1 normally acquires only the TOW as the time information.

### Navigation data message (GLONASS satellite)

GLONASS (a Global Navigation Satellite System) is a satellite system operated by Russia, has 24 satellites in the constellation, uses 21 satellites to transmit satellite signals, and uses the other three satellites as spares. The satellites are on three orbits with eight satellites on each orbit. More specifically, the satellites are on three orbital planes, the longitude of the ascending node differs by 120 degrees from plane to plane, and the eight satellites are located at equal intervals on each plane. As a result, a minimum four satellites can always be seen from Earth.

All GLONASS satellites broadcast the same standard precision (SP) signal, but each satellite transmits on a different frequency. GLONASS uses FDMA (Frequency Division Multiple Access) centered on 1602.0MHz. Each satellite therefore transmits at a frequency of 1602MHz + (N x 0.5625MHz), where N is the frequency channel number (N = -7, -6, -5, ...5, 6). The maximum 24 satellites are arranged so that signals can always be received on different frequencies from Earth.

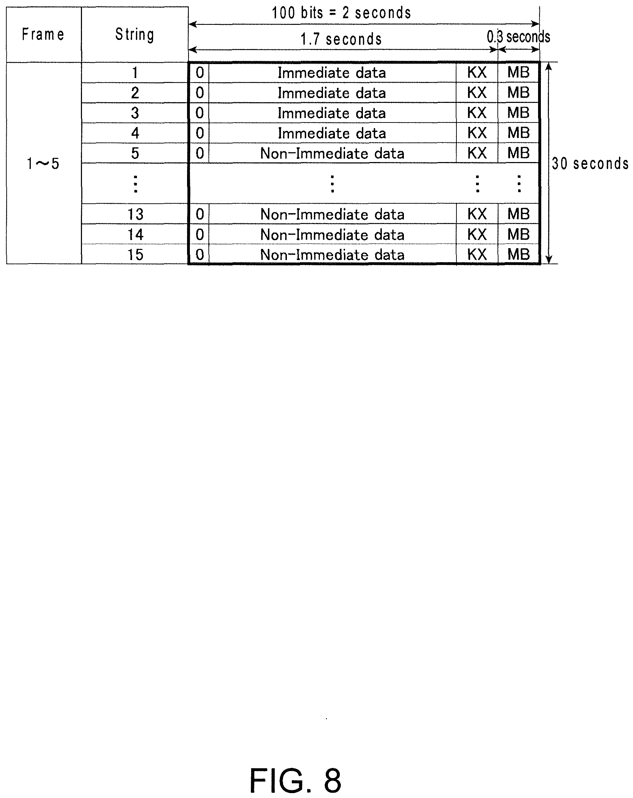

One cycle of the GLONASS navigation data message is called a "superframe. " One superframe is transmitted every 2.5 minutes. Each superframe contains five frames. As shown in FIG. 8, each frame contains 15 strings. The length of each string is 2 seconds, and the length of each frame is 30 seconds.

Each frame contains Immediate data and Non-immediate data. The Immediate data is equivalent to the ephemeris of the GPS satellite signal, and the Non-immediate data is equivalent to the almanac. The current location can be calculated and navigation is possible by receiving the Immediate data.

As shown in FIG. 8, a 0 is transmitted at the beginning of each string. A time mark MB is transmitted at the end of each string. A Hamming code KX is transmitted before the time mark MB for detecting and correcting data errors.

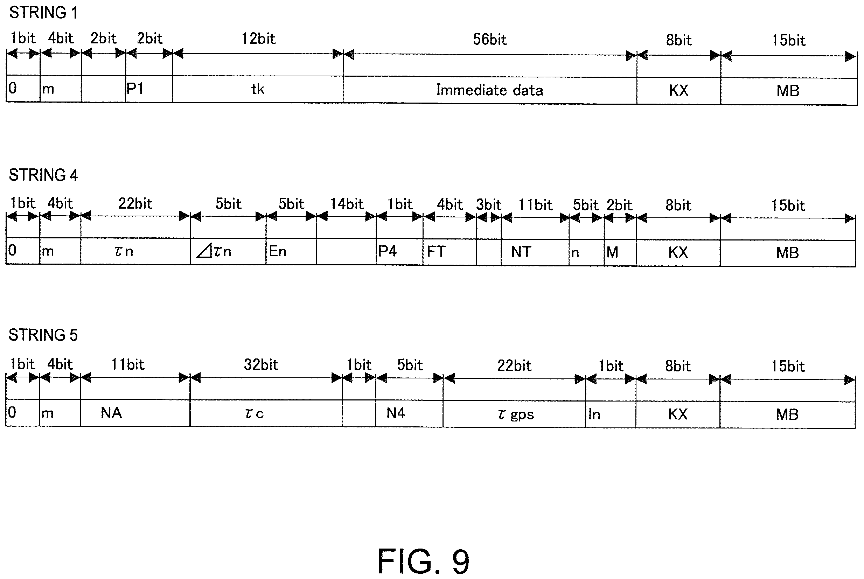

FIG. 9 shows the format of strings 1, 4, and 5 containing the information required to acquire the time from GLONASS satellite signals.

Word m in each string is 4 bits long and identifies the string number (1 to 15) within the frame.

Word t_{K} in string 1 is 12 bits long. The first five bits indicate the integer number (0 - 23) of hours since the beginning of the current day. The next six bits indicate the integer (0 - 59) number of minutes elapsed since the beginning of the current hour. The last one bit indicates either 0 seconds or 30 seconds. This word t_{K} indicates the UTC at the beginning of the superframe.

Word N_{T} in string 4 is 11 bits long, and indicates the number of days (1 - 1461) in a four-year period starting from January 1 in a leap year.

Word N4 in string 5 is 5 bits long, and is the four-year interval number (1 - 31) indicating the number of four-year intervals since 1996.

Word NA is 11 bits long, and indicates the number of days (1 - 1461) in a four-year period starting from January 1 in a leap year. Word NA thus has the same content as word N_{T}.

In the initialized state when no time data (time information) is stored in the time data storage unit 600 of the electronic timepiece 1, time information for the current year, month, day, hour, minute, and second can be acquired by receiving words N4 and NA, or words N_{T}, t_{K}, and m. The current date and time can therefore be kept by setting this time information in the internal time data 630 and then counting up internally every second.

More specifically, the current year, month, day can be acquired by receiving word N4 in string 5 and either word N_{T} in string 4 or word NA in string 5. For example, if N4 is 5 and NA is 10, the date is 2016 January 10. Because the year is 1996 + 4 x N, the year becomes 1996 + 4 x 5 = 2016. Because NA is the number of days since January 1 of a leap year, the date becomes January 10.

To acquire the current hour, minute, and second, word t_{K} is received and then word m. If word t_{K} says 10 h 47 m 30 s, the superframe is known to have started at 10:48:30. If the next word m received is 3, that string is known to be string 3. Because one string takes two seconds to send, string 3 is transmitted 6 seconds after the beginning of the superframe. String 3 is therefore known to have been transmitted at 10:48:30 plus 6 seconds, that is, at 10:48:36.

Because GLONASS time is UTC, leap seconds are accounted for in the time. While the leap second information that is transmitted every 12.5 minutes must be received with GPS, GLONASS enables acquiring UTC, which accounts for leap seconds, in a short time.

To correct the internal time when time information is already stored in the time data storage unit 600, the accuracy of the timepiece can be maintained by receiving only word m. For example, if word m is received when the internal time is 10:50:02 and m = 2, word m was transmitted 4 seconds from the start of the superframe, and the correct time can be set by adjusting the internal time to 10:50:04.

### Manual reception process

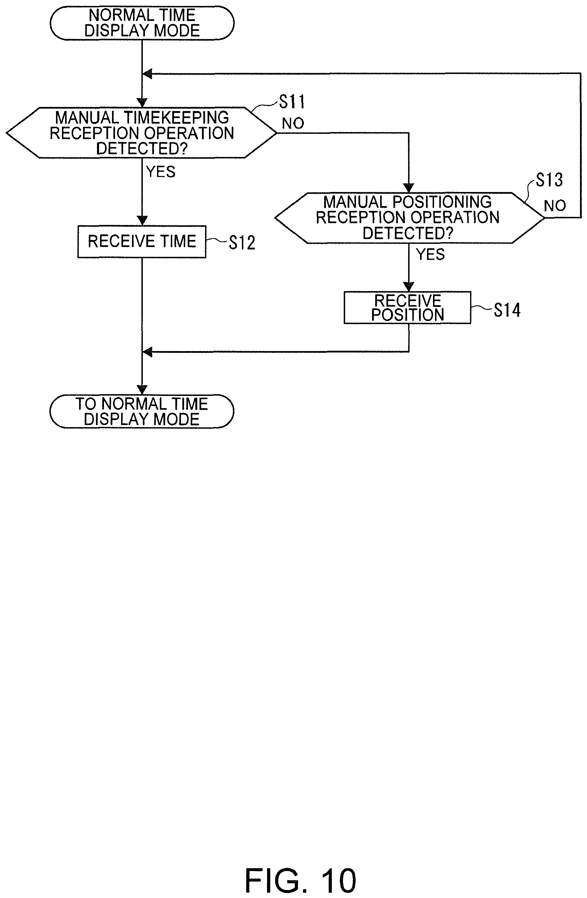

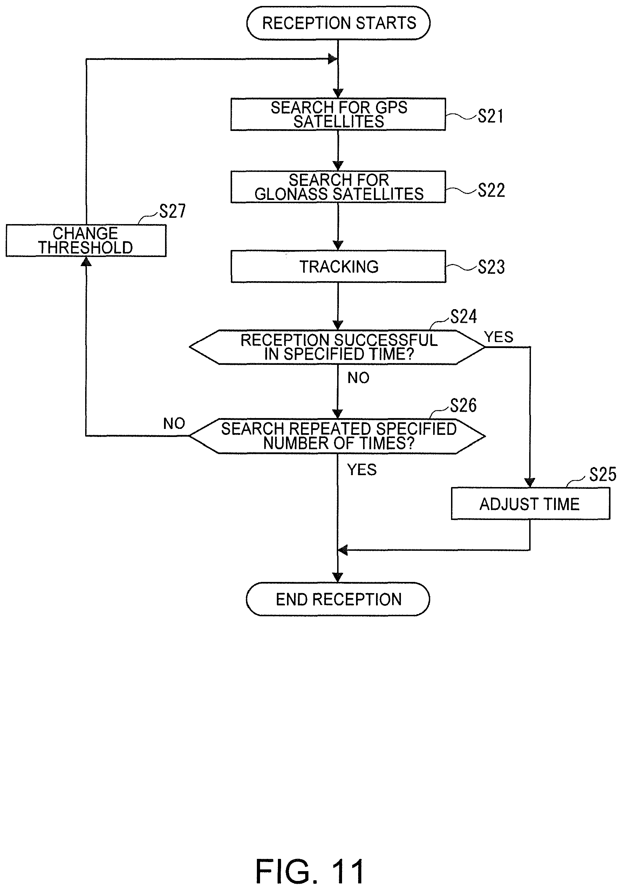

Reception processes of the electronic timepiece 1 according to this embodiment are described below with reference to FIG. 10 and FIG. 11.

FIG. 10 is a flow chart of the manual reception process executed by the manual reception control unit 412 of the reception control means 41, and FIG. 11 is a flow chart if the satellite signal reception process.

With the time normally displayed by the hands 21, 22, 23 (in the normal time display mode), the manual reception control unit 412 determines whether or not the user manually performed an operation to start reception (step S11). The manual reception control unit 412 returns YES in step S11 when the user performs the manual time reception operation by pressing the button 73 for a first set time (greater than or equal to 3 seconds and less than 6 seconds).

If the manual reception control unit 412 returns YES in step S11, it executes the timekeeping reception process (step S12).

If the manual reception control unit 412 returns NO in step S11, it determines if the user performed the manual positioning reception operation (step S13). The manual reception control unit 412 returns YES in step S13 when the user performs the manual positioning reception operation by pressing the button 73 for a second set time (greater than or equal to 6 seconds), and then executes the positioning reception process (step S14).

If the manual reception control unit 412 returns NO in step S13, the process returns to step S11. In the normal time display mode, the manual reception control unit 412 thus continuously monitors if the button 73 is pressed for a first set time or a second set time, and continues displaying the normal time until the button 73 is pressed the first set time or the second set time by the user.

When the timekeeping reception process in step S12 or the positioning reception process in step S14 ends, the manual reception control unit 412 returns to the normal time display mode indicating the time as usual.

Timekeeping reception process and positioning reception process

The reception process executed in the timekeeping reception process of step S12 and the positioning reception process of step S14 is described next. Note that the number of satellites locked onto and the information that is acquired differ in the timekeeping reception process and the positioning reception process, but the reception process is the same, including the positioning information satellite 100 search and tracking operations, and is therefore described first. The reception process executed by the automatic reception control unit 411 in the timekeeping mode is also the same as the timekeeping reception process in step S12, and further description thereof is thus omitted.

As described above, the reception control means 41 controls reception in a cold start state not knowing which satellites are currently visible and broadcasting signals that can be received.

As shown in FIG. 11, the reception control means 41 in this embodiment of the invention can receive signals from two types of positioning information satellites 100, and searches first for GPS satellites (step S21). As a result, the reception control means 41 activates and operates the GPS processing unit 31A and GPS satellite signal search unit 36A to search for GPS satellites.

The first search for positioning information satellites 100 (GPS satellites and GLONASS satellites) is done using the threshold set to the highest threshold level that can be set. For example, if the sensitivity threshold can be set in three levels, -130 dBm, -135 dBm, -140 dBm, the reception control means 41 sets the highest threshold of -130dBm in the first search for positioning information satellites 100. As a result, the receiver device 30 looks for a positioning information satellites with a signal reception level of -130 dBm or greater.

When the search for all GPS satellites in step S21 ends, the reception control means 41 stops and puts the GPS processing unit 31A and GPS satellite signal search unit 36A to the non-functioning state. Next, the reception control means 41 controls and operates the GLONASS processing unit 31B and GLONASS satellite signal search unit 36B of the receiver device 30 to look for GLONASS satellites (step S22). Because this is also the first search for GLONASS satellites, the reception control means 41 again sets the threshold to the highest level (-130 dBm) and searches for GLONASS satellites.

Note that the steps (S21, S22) of searching for GPS satellites and GLONASS satellites are described further below.

After the satellite search processes of steps S21 and S22, the reception control means 41 operates the satellite tracking unit 37 and computing unit 38 in a tracking process (step S23). In this process, the satellite tracking unit 37 tracks a locked satellite and acquires the navigation data message, and the computing unit 38 demodulates the navigation data message and acquires the satellite information contained in the navigation data message from the positioning information satellite 100, including the orbit information and time information from the positioning information satellite 100. In the positioning reception process in step S14, the computing unit 38 calculates the positioning information (location data) from the orbit information of four or more positioning information satellites 100.

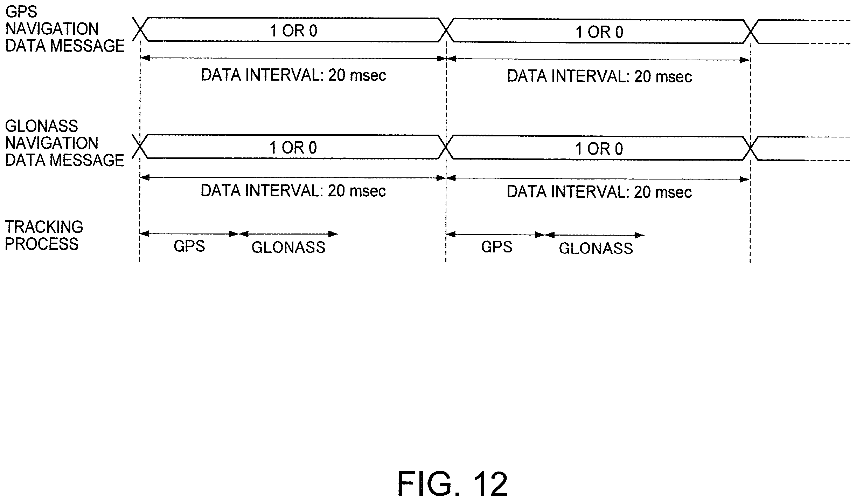

If both GPS and GLONASS satellites were locked onto in steps S21 and S22, the reception control means 41 tracks GPS satellites and tracks GLONASS satellites exclusively of each other. More specifically, as shown in FIG. 12, because the navigation data message is transmitted at 50 bps (50 bits/second) by both GPS and GLONASS satellites, the data interval between bits is 20 msec. The GPS tracking process and the GLONASS tracking process are executed exclusively during this 20 msec data interval. More specifically, the GPS tracking process and the GLONASS tracking process are not executed at the same time, and the GLONASS tracking process executes after the GPS tracking process.

When tracking a GPS satellite signal, the reception control means 41 operates the GPS processing unit 31A of the RF unit 31 and the GPS satellite tracking unit 37A of the baseband unit 35. When tracking a GLONASS satellite signal, the reception control means 41 operates the GLONASS processing unit 31B of the RF unit 31, and the GLONASS satellite tracking unit 37B of the baseband unit 35. These components therefore function exclusively of each other, and do not operate at the same time.

Note that when plural satellites of the same type are locked, tracking each satellite signal proceeds exclusively on a time-division basis. For example, if four GPS satellites are locked, each GPS satellite signal is tracked on a time-division basis. As a result, if the tracking process time for one GPS satellite signal is 1 msec, the tracking process time for the four GPS satellite signals is 4 msec. Because the tracking process consumes only 4 msec of the 20 msec data interval, the tracking process can rest for the remaining 16 msec. Furthermore, even if four GPS satellites are locked and four GLONASS satellites are locked, the tracking process time of the combined 8 satellite signals is 1 msec x 8 = 8 msec, and the tracking process can rest for the remaining 12 msec.

The reception control means 41 then determines if satellite signal reception has succeeded within a specific time from the start of reception (step S24). In the timekeeping reception process, the reception control means 41 determines in step S24 that reception was successful if a satellite signal is received and time information is acquired from one or more positioning information satellites 100 within the specific time. In the positioning reception process, the reception control means 41 determines in step S24 that reception was successful if satellite signals are received, time information is acquired, and the positioning information is calculated from four or more positioning information satellites 100 within the specific time.

IF the reception control means 41 determines in step S24 that reception was successful (step S24 returns YES), it corrects the current time based on the time information acquired from the satellite signal (step S25). If positioning information was also acquired in the positioning reception process, the reception control means 41 gets the time zone data (time difference information) from the time zone storage unit 680 based on the acquired positioning information (latitude and longitude), and stores the time zone data in the time zone data 650. The reception control means 41 also adds the time zone data 650 to the internal time data 630, which is UTC updated based on the acquired time information, to get the time at the current location, updates the display time data 640 to the time acquired for the current location, and then corrects the time displayed by the hands 21 to 23 (step S25).

When the time correction process of step S25 is executed, the reception control means 41 ends the current reception process.

However, if the reception control means 41 determines in step S24 that reception failed (step S24 returns NO), it determines if the satellite search has repeated a specific number of times from when reception started (step S26).

As described above, the first search for positioning information satellites 100 (GPS satellites and GLONASS satellites) during the reception process is done using a sensitivity threshold of -130 dBm. If positioning information satellites are not found at the -130 dBm sensitivity threshold, this embodiment of the invention gradually reduces the sensitivity threshold and executes the process for acquiring satellite signals at a lower signal reception level. In this embodiment, the sensitivity threshold is lowered first to -135 dBm and then to -140 dBm, and the search for positioning information satellites is executed a maximum three times.

As a result, if the search has not executed the specific number of times (three in this example) in step S26 (step S26 returns NO), the reception control means 41 changes the sensitivity threshold from -130 dBm to -135 dBm (step S27). The reception control means 41 then repeats steps S21 to S26 using the lower sensitivity threshold. If the search has still not executed the specific number of times in step S26 (step S26 returns NO), the reception control means 41 changes the sensitivity threshold from -135 dBm to -140 dBm (S27), and then repeats steps S21 to S26 using the lower sensitivity threshold.

If the search has executed the specific number of times in step S26 (step S26 returns YES), the reception control means 41 ends the reception process.

### Satellite search process

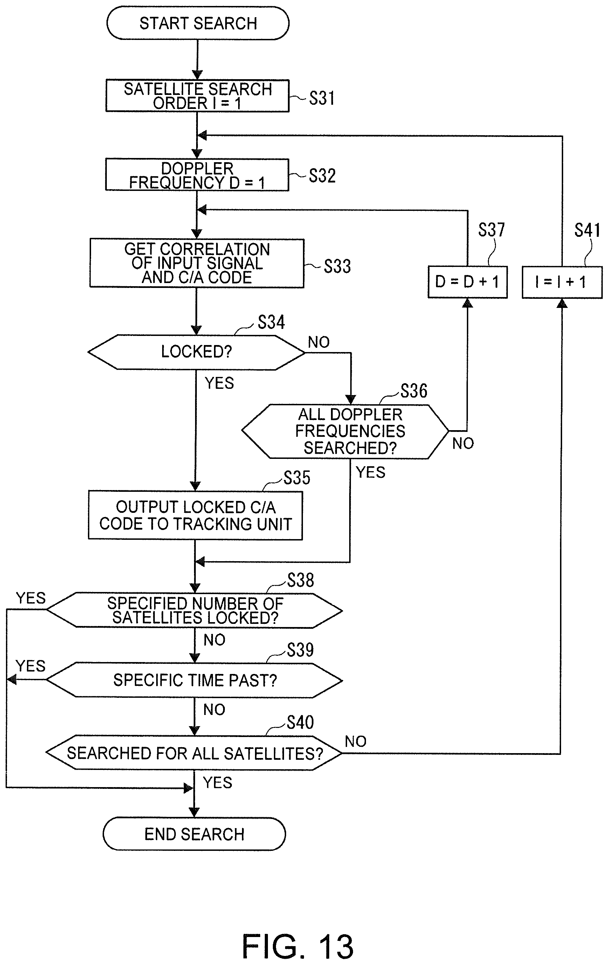

The satellite search processes in steps S21 and S22 is described further below with reference to the flow chart in FIG. 13.

The GPS satellite signal search unit 36A of the satellite signal search unit 36 operates according to the flow chart in FIG. 13 in the GPS satellite search process of step S21, and the GLONASS satellite signal search unit 36B of the satellite signal search unit 36 operates according to the flow chart in FIG. 13 in the GLONASS satellite search process of step S22.

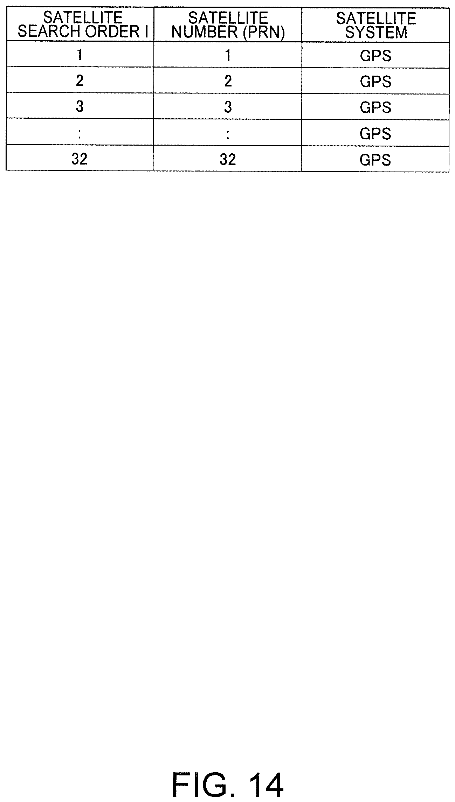

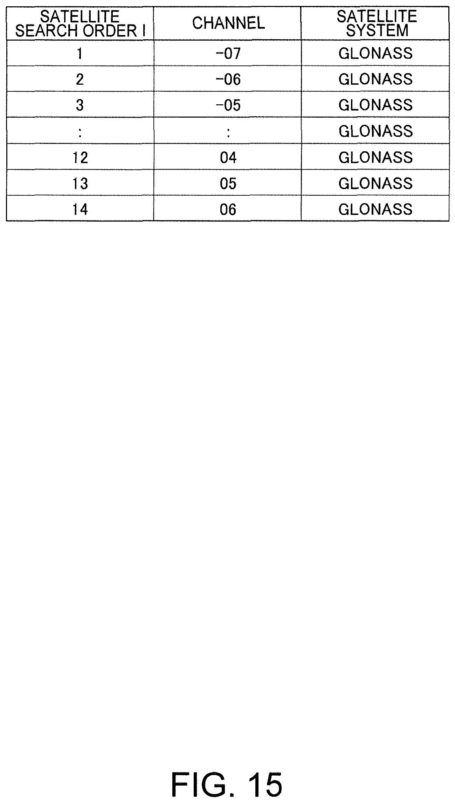

When the satellite search process starts, the satellite signal search unit 36 initializes a variable I indicating the satellite search order to 1 (step S31). The search order must be previously set in the satellite signal search unit 36. In this embodiment, the GPS satellite signal search unit 36A sets the satellite search order based on the GPS satellite number PRN as shown in FIG. 14. As shown in FIG. 15, the GLONASS satellite signal search unit 36B sets the satellite search order based on the channel number.

Therefore, when I = 1, the GPS satellite signal search unit 36A searches for the GPS satellite of satellite number PRN 1. The GLONASS satellite signal search unit 36B searches for the GLONASS satellite on channel -7 when I = 1.

Note that the search order for GPS satellites and GLONASS satellites is not limited to the order shown in FIG. 14 and FIG. 15. For example, in the case of GPS satellites, the satellite number PRN is not limited to increasing sequentially from 1, and the search may proceed in a random order such as satellite number PRN 10, 2, 30, 23 and so forth. In the case of a GLONASS satellite search, the channel numbers may be searched randomly.

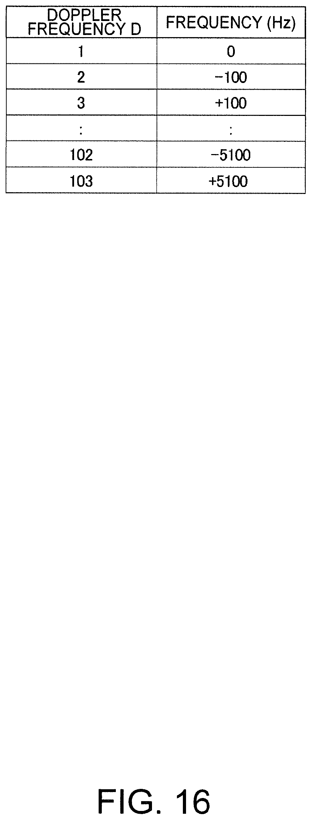

Next, the satellite signal search unit 36 initializes a variable D denoting the Doppler frequency to 1 (step S32). Because the positioning information satellites 100 travel at high speed, the frequency transmitted from the positioning information satellite 100 varies with the movement. A positioning information satellite 100 can be found by adjusting the frequency of the satellite signal search unit 36 to the Doppler frequency. The satellite signal search unit 36 therefore normally changes the frequency within the range of approximately +/-5100 Hz of the center frequency of the satellite signal. As a result, the satellite signal search unit 36 sets the relationship between variable D and the Doppler frequency as shown in FIG. 16. Note that FIG. 16 shows an example in which the frequency resolution is 100 Hz. In this example, a search process of 5100/100 * 2 + 1 = 103 steps is required when the frequency changes every 100 Hz from -5100 Hz to 5100 Hz.

The GPS satellite signal search unit 36A therefore searches for a GPS satellite using the GPS center frequency of 1575.42 MHz when D = 1. The GLONASS satellite signal search unit 36B searches for a GLONASS satellite at the frequency determined by the channel number when D = 1.

Note that because the frequency resolution changes according to the sensitivity threshold of the reception level, the relationship between variable D and the Doppler frequency is set for each frequency resolution setting. In other words, the lower the sensitivity threshold goes, the lower the frequency resolution. As a result, the number of steps in the search process increases as the sensitivity threshold decreases, and the search time increases accordingly.

Next, the satellite signal search unit 36 calculates the correlation between the input signal from the RF unit 31 and the C/A code (step S33), and determines if there is a satellite, that is, if a satellite was locked (step S34). In the case of a GPS satellite, the C/A code corresponding to the satellite number PRN is used to calculate the correlation. In the case of GLONASS satellites, the satellites are differentiated by frequency, all satellites use the same C/A code, and this common C/A code is used for correlation.

If the correlation value is high, the satellite signal search unit 36 knows a satellite was found and determines that satellite was locked (step S34 returns YES). If the satellite signal search unit 36 determines a satellite was locked (step S34 returns YES), the satellite signal search unit 36 outputs the C/A code of the locked satellite to the satellite tracking unit 37 (step S35). As a result, the satellite tracking unit 37 can track the locked positioning information satellite 100, receive the satellite signal, and decode the data.

However, if step S34 results in NO, the satellite signal search unit 36 determines if all Doppler frequencies have been searched (step S36). For example, if the maximum value of the Doppler variable D is 103 as shown in FIG. 16, the satellite signal search unit 36 determines all Doppler frequencies were searched if the current value of variable D is 103.

If step S36 results in NO, the satellite signal search unit 36 adds 1 to variable D (step S37), and calculates the correlation in S33 again using the Doppler frequency corresponding to the updated value of variable D.

If all Doppler frequencies were searched (step S36 returns YES), or if the C/A code of the locked satellite was output to the satellite tracking unit 37 in step S35, the satellite signal search unit 36 determines that the specific number of satellites was locked (step S38). In the timekeeping reception process, this specific number of satellites is the number of satellites enabling acquiring the time information, and is normally 1. In the positioning reception process, the specific number of satellites is the number of satellites enabling calculating the positioning information from the received navigation data message, and is normally 4. This number is not limited to locking four positioning information satellites of the same type, and the specific number of satellites is considered locked even when a combination of four GPS and GLONASS satellites is locked.

When the satellite signal search unit 36 determines the specific number of satellites was locked (step S38 returns YES), there is no need to continue searching for more satellites, and the satellite search process ends.

However, if the specific number of satellites was not locked (step S38 returns NO), the satellite signal search unit 36 determines if a specific time has past since the search started (step S39).

This specific time is set with consideration for the time required to search all satellites in the target constellation, and in this example is 60 seconds.

If the specific time has past (step S39 returns YES), the satellite signal search unit 36 ends the current satellite search process.

However, if the specific time has not past (step S39 returns NO), the satellite signal search unit 36 determines if all satellites were searched (step S40). More specifically, when searching for GPS satellites and the variable I denoting the satellite search order reaches the maximum value of 32, the satellite signal search unit 36 determines all GPS satellites were searched. When searching for GLONASS satellites and the variable I denoting the satellite search order reaches the maximum value of 14, the satellite signal search unit 36 determines all GLONASS satellites were searched.

If step S40 returns NO, the satellite signal search unit 36 adds 1 to I (step S41), and repeats steps S32 to S40 of the search process using the satellite number (in the case of GPS satellites) or the channel (in the case of GLONASS satellites) corresponding to the updated value of variable I.

### Satellite search process time

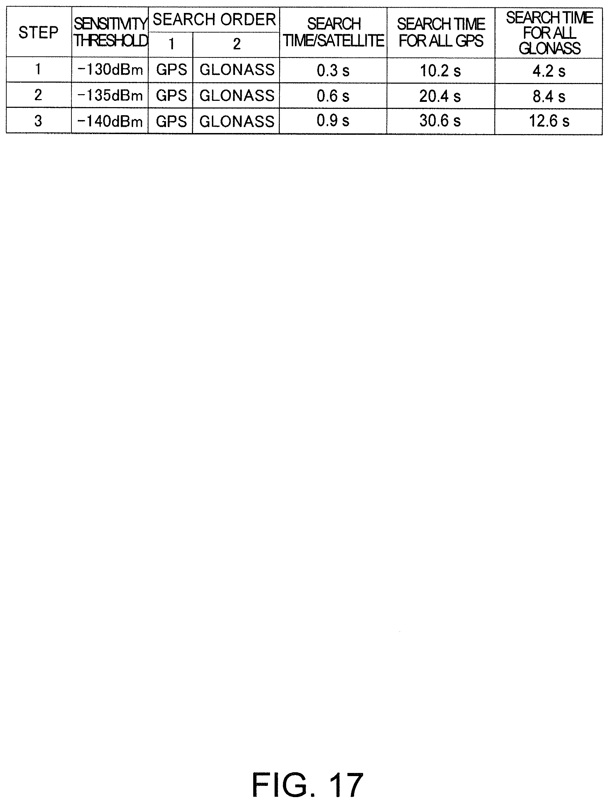

The time required for the GPS satellite and GLONASS satellite search processes is described next. FIG. 17 shows the GPS satellite and GLONASS satellite search times at the different sensitivity threshold levels.

The time required to search (find) a positioning information satellite 100 varies according to the value of the sensitivity threshold (threshold). The lower the threshold, the longer the search requires.

More specifically, when the threshold is high, only positioning information satellites 100 with a high reception level are locked, and the frequency resolution of the Doppler frequency used for searching can be set low (increasing the change in the frequency). As a result, as shown in FIG. 17, the search time for one satellite is short, the time required to search for all positioning information satellites 100 is short, and power consumption can be reduced.

However, when the threshold is low, even positioning information satellites 100 with a low reception level are locked, and the frequency resolution used for searching must be set high (decreasing the change in the frequency). As a result, as shown in FIG. 17, the search time for one satellite increases, the time required to search for all positioning information satellites 100 is long, and power consumption increases.

As a result, when the sensitivity threshold decreases, the search time for all GPS satellites and the search time for all GLONASS satellites increases.

The specific time used in step S39 in FIG. 13 is set based on these search times, and is set, for example, to a longer time (such as 60 seconds) than the time (30.6 seconds) required to search for GPS satellites at the -140 dBm sensitivity threshold resulting in the longest search time. The specific time used in step S39 may also be set based on the satellite search time calculated from the type of satellite to look for and the sensitivity threshold.

### Effect of the first embodiment

The effect of an electronic timepiece 1 (satellite signal receiving device) according to the first embodiment of the invention is described below.

Because the receiver device 30 includes a GPS reception unit 30A for finding and tracking GPS signals, and a GLONASS reception unit 30B for finding and tracking GLONASS signals, two types of satellites, GPS satellites and GLONASS satellites, can be searched for and tracked. As a result, more satellites can be used than when finding and receiving signals from only one type of satellite, the likelihood of being able to lock onto a satellite is improved even in urban canyons and spaces between buildings, and the probability of successfully acquiring time information and positioning information can also be improved.

The GPS reception unit 30A and GLONASS reception unit 30B function exclusively of each other and do not function simultaneously. As a result, current consumption can be reduced compared with when the GPS reception unit 30A and GLONASS reception unit 30B function simultaneously. Plural satellite navigation systems can therefore be embodied even in a wristwatch with a low capacity battery.

Furthermore, because a separate analog processing unit is provided for each type of satellite, a GPS analog processing unit 33A and a GLONASS analog processing unit 33B in this example, the individual processing units 33A and 33B can be customized for efficient processing of different satellite signals, and current consumption can be reduced compared with a configuration using a single analog processing unit to process plural types of satellite signals. This also enables embodying plural satellite navigation systems in a wristwatch with small battery capacity.

Because more satellites can be searched for by searching for two types of satellites than when searching for only one type of satellite, the possibility of being able to lock onto the specified number of satellites (1 or 4) in the first search using the first threshold setting is increased by setting the threshold to the first threshold level (-130 dBm) in the first iteration of the search for GPS satellites and GLONASS satellites.

As described above, the higher the threshold, the shorter the search time for positioning information satellites. As a result, this embodiment of the invention can lock onto positioning information satellites with a high signal reception level more quickly than when searching with the threshold fixed to a second threshold (-135 dBm).

The rate of success receiving the desired information is also higher with positioning information satellites having a high signal reception level. Receiving the desired information (acquired information) can therefore also succeed sooner and power consumption can be reduced by being able to quickly lock onto positioning information satellites with a high signal reception level.

Because positioning information satellites with a low signal reception level can be locked by searching with the threshold set to a second or third threshold level, the chance of not being able to lock onto even a single positioning information satellite 100 decreases, and the probability of successful reception in the timekeeping reception process can be improved.

This embodiment of the invention can shorten the reception time in the timekeeping reception process and the positioning reception process, and thereby also reduces power consumption. For example, the reception time required for the positioning process is the sum of the satellite search time, navigation data message decoding time, and the time required to compute the time information and the positioning information. The decoding time and computing time differs according to system performance, and in a battery-powered system is approximately 20 seconds at -130 dBm and 30 seconds at -135 dBm.

When there are two GPS satellites and two GLONASS satellites with a signal reception level enabling signal locking in step 1 in FIG. 17 (when the sensitivity threshold is -130 dBm), and there are two GPS satellites and two GLONASS satellites with a signal reception level enabling signal locking in step 2 (when the sensitivity threshold is -135 dBm), the search time is as described below.

Because this embodiment of the invention can search for GPS satellites and GLONASS satellites, a total of four satellites, two GPS satellites and two GLONASS satellites, can be locked by the search in step 1 (-130 dBm). The satellite search time is therefore 14.4 seconds, the sum of 10.2 seconds required to search all GPS satellites and the 4.2 seconds required to search for all GLONASS satellites. Combined with the total 20 seconds of decoding time and computing time, the total reception time is therefore 34.4 seconds.

When searching for only GPS satellites without also looking for GLONASS satellites, step 1 is not sufficient to lock onto four satellites and step 2 (-135 dBm) is also required. The time required to search for all GPS satellites in step 1 (-130 dBm) is 10.2 seconds, and the time required to search for all GPS satellites in step 2 (-135 dBm) is 20.4 seconds. The total search time is therefore 30.6 seconds. Combined with the total 30 seconds of decoding time and computing time, the total reception time is therefore 60.6 seconds.

Because the reception time until time information and positioning information are acquired in the reception process is shorter in this embodiment of the invention, the time the user must wait from the start to the end of reception is shorter and user convenience can be improved.

Furthermore, if the battery capacity of the storage battery 130 is 30 mAH and current consumption by the reception process is 13 mA, the reception process can be run approximately 314 times if the reception time when searching for GPS satellites and GLONASS satellites is 34.4 seconds as described above. However, if the reception time for only GPS satellites is 60.6 seconds as described above, the reception process can be run only approximately 178 times.

The number of times the reception process can be run when searching for GPS satellites and GLONASS satellites is therefore approximately 1.8 times more than when searching for only GPS satellites. This embodiment of the invention can therefore increase the number of times signals can be received by the electronic timepiece 1, and can improve user convenience.

### Embodiment 2

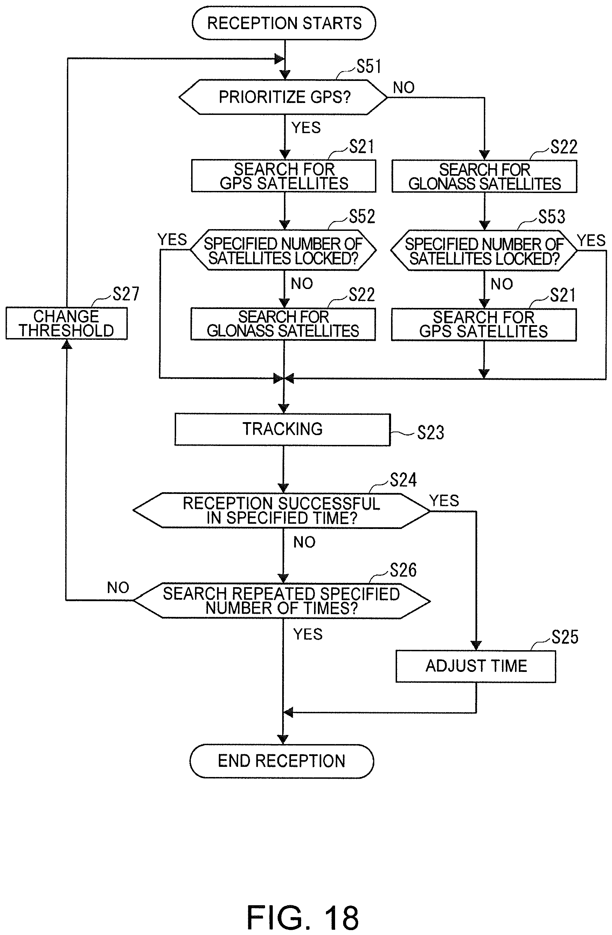

When searching for two types of satellites, GPS satellites and GLONASS satellites, the electronic timepiece 1 according to the first embodiment of the invention prioritizes searching for GPS satellites (step S21) and then searches for GLONASS satellites (step S22). The electronic timepiece according to the second embodiment of the invention first determines which type of satellite to prioritize before starting to search. Steps that are the same in the reception process according to the second embodiment of the invention shown in FIG. 18 and the reception process according to the first embodiment are therefore identified by the same reference numerals and further description thereof is omitted.

As shown in FIG. 18, when the satellite signal reception process starts in the timekeeping process or the positioning process, the satellite signal search unit 36 first determines whether or not to prioritize searching for GPS satellites (step S51). If the number of satellites of each type of positioning information satellite 100 that was locked in the last reception process is stored in memory, for example, the decision of step S51 can be made based on the number of satellites.

For example, if the number of GPS satellites locked the last time reception was attempted is greater than the number of GLONASS satellites that were locked, the satellite signal search unit 36 determines to prioritize a GPS satellite search and returns YES in step S51. However, if the number of GPS satellites locked in the last reception is less than the number of GLONASS satellites that were locked, the satellite signal search unit 36 determines to prioritize a GLONASS satellite search and returns NO in step S51.

If the number of GPS satellites locked in the last reception is the same as number of GLONASS satellites that were locked, reception may proceed in the same order as during the last reception process.

If the satellite signal search unit 36 returns YES in step S51, it executes the satellite search process in the same order as described in the first embodiment, that is, the GPS satellite search process (step S21) and then the GLONASS satellite search process (step S22).

However, if the satellite signal search unit 36 returns NO in step S51, it executes the satellite search process in the opposite order as described in the first embodiment, that is, the GLONASS satellite search process (step S22) and then the GPS satellite search process (step S21).

The satellite signal search unit 36 then determines if a specific number of the positioning information satellites 100 prioritized for searching was locked (steps S52, S53), and if the specific number of satellites was locked, stops the satellite search process and starts the tracking process in step S23.

More specifically, if a GPS satellite search (step S21) is prioritized, and the specific number of GPS satellites alone is locked (1 satellite in the timekeeping reception process, 4 satellites in the positioning reception process), the satellite signal search unit 36 skips the GLONASS satellite search process (step S22) and executes the tracking process (step S23).

Likewise, if a GLONASS satellite search (step S22) is prioritized, and the specific number of GLONASS satellites alone is locked (1 satellite in the timekeeping reception process, 4 satellites in the positioning reception process), the satellite signal search unit 36 skips the GPS satellite search process (step S21) and executes the tracking process (step S23).

Steps S23 to S27 following the tracking process in step S23 are the same as in the first embodiment described above, and further description thereof is omitted here.

### Effect of embodiment 2

In addition to having the same effect as the first embodiment described above, this second embodiment of the invention determines whether to prioritize searching for GPS satellites or GLONASS satellites in step S51 when starting a positioning information satellite 100 search, and can therefore improve the probability of being able to lock the specific number of satellites by the prioritized satellite search process. More specifically, when the type of satellite to prioritize is set based on the number of satellites previously locked, and the time or place where reception is attempted are the same as previously, the likelihood of being able to lock the same type of satellites is high. Therefore, by selecting the type of satellites to prioritize for searching in step S51, the specific number of satellites can be found and locked sooner.

The time required for the satellite search process can also be shortened because the satellite search process stops and control goes to the tracking process (step S23) when the specific number of positioning information satellites 100 prioritized for searching is locked (step S52 or S53 returns YES) . As a result, current consumption by the search process can be reduced.

Note that the decision method used in step S51 is not limited to prioritizing the type of satellite with the highest number of satellites locked in the last reception process.

For example, the type of positioning information satellite 100 to prioritize may be set based on the location currently set as the time zone. More specifically, satellites in the Global Navigation Satellite System (GNSS) of the country of the current location of the user of the electronic timepiece 1 may be prioritized for reception. For example, GPS satellites may be prioritized if the currently set location is in the United States, and GLONASS satellites may be prioritized if the currently set location is in Russia.

Furthermore, comparing GPS satellites and GLONASS satellites, GPS satellites are more easily locked in low to medium latitudes, while GLONASS satellites at a higher inclination than GPS satellites are more easily locked at high latitudes. The type of positioning information satellite 100 to prioritize may therefore be set according to the latitude of the current location.

### Embodiment 3

When searching for satellites of both types using a single threshold and the specific number of satellites is locked, the electronic timepiece 1 according to the third embodiment of the invention continues only tracking and does not continue searching for satellites.

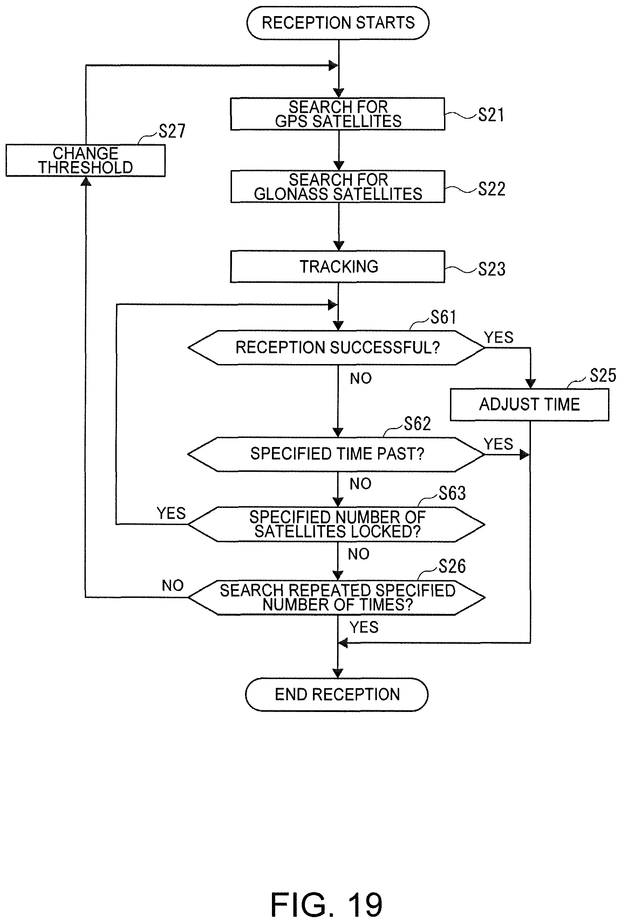

Steps that are the same in the reception process according to the third embodiment of the invention shown in FIG. 19 and the reception process according to the first embodiment are therefore identified by the same reference numerals and further description thereof is omitted.

As shown in FIG. 19, when the satellite signal reception process starts in the timekeeping process or the positioning process, the satellite signal search unit 36 searches first for GPS satellites (step S21), then searches for GLONASS satellites (step S22), and then goes to the tracking process (step S23) as in the first embodiment.

The reception control means 41 then determines if reception was successful (step S61). The method of determining if reception was successful is the same as in the foregoing embodiments.

If the reception control means 41 determines in step S61 that reception was successful (step S61 returns YES), the reception control means 41 corrects the current time based on the time information acquired from the satellite signals (step S25), and then ends the reception process.

If the reception control means 41 determines NO in step S61, it determines if a specific time has past since reception started (step S62) . This specific time is set to 60 seconds for the timekeeping reception process, and to 120 seconds for the positioning reception process, for example.

If the reception control means 41 determines YES in step S62, that is, if the specific time past without successful reception, it ends the reception process.

When NO is returned in step S62, the reception control means 41 determines if the specific number of satellites was locked (step S63). If the result of step S63 is NO, the reception control means 41 determines if the search was performed a specific number of times (three times in the third embodiment, the same as in the first embodiment) (step S26).

If NO is determined in step S26, the reception control means 41 changes the threshold (step S27) as in the previous embodiments, and then repeats the process from the GPS satellite search process in step S21.

The reception control means 41 ends the reception process if YES is determined in step S26.

Because the number of satellites required to acquire the time information and positioning information have been locked if the reception control means 41 returns YES in step S63, the process of changing the threshold and searching for satellites again (steps S27 to S22) is not executed. More specifically, the reception control means 41 ends the satellite search process if YES is returned by step S63. In this event, the reception control means 41 continues tracking the satellites already locked, and continues with the steps of acquiring the navigation data message and computing the time information and positioning information. When reception is determined successful in step S61, the reception control means 41 executes the time correction step S25. When the specific time passes without successful reception and operation times out, the reception control means 41 ends the reception process without correcting the time.

### Effect of embodiment 3

This third embodiment of the invention stops the search process when a specific number of satellites is locked in the GPS satellite search process (S21) and the GLONASS satellite search process (S22), therefore does not change the threshold and execute a new search process, and can therefore reduce current consumption accordingly in addition to having the same effect as the first embodiment described above. More particularly, if the threshold is lowered and a new search process executed, the search process time increases and current consumption increases. However, by only continuing the tracking process, which has lower current consumption than the satellite search process, this embodiment can also reduce power consumption by the reception process.

Note that steps (S51, S52, S53) of determining the satellite search priority described in the second embodiment may also be applied to the third embodiment.

### Embodiment 4

An electronic timepiece 1A according to the fourth embodiment of the invention has a locked satellite display device 80 that indicates the type of Global Navigation Satellite System (GNSS) or other satellite navigation system locked during the current reception process.

The locked satellite display device 80 has an indicator 81 and a scale 82. The indicator 81 indicates the type of positioning information satellite 100 that is locked. More specifically, the indicator 81 in this embodiment points to GPS indicating that only GPS satellites are locked, GLO indicating that only GLONASS satellites are locked, or GPS & GLO indicating that GPS satellites and GLONASS satellites are locked.

As a result, the user of the electronic timepiece 1A can easily know the type of satellites currently locked.

When the type of satellite (satellite navigation system) to be locked can be manually selected, the user may use the input device 70 to indicate the selected type of satellite with the locked satellite display device 80.

For example, if the crown 71 or buttons 72 to 74 can be operated to enter the satellite selection mode, and the type of satellite can be selected according to the number of times the button 72 at 10:00 is pressed, the indicator 81 points successively to GPS, GLO, and GPS & GLO each time the button 72 is pressed. The type of satellite to lock onto is then saved by ending the satellite selection mode while the indicator 81 is pointing to the type of satellite selected by the user. The input device 70 can therefore be used as a setup device for setting the type of positioning information satellite to receive.

When the user can manually select the type of satellite to lock and receive as described above, the user can select the satellites that can be easily locked based on information such as the current location of the user, the satellite locking process time can therefore be shortened, and current consumption reduced.

### Embodiment 5

An electronic timepiece 1 according to the fifth embodiment of the invention differs from the foregoing embodiments in being able to search for the quasi-zenith satellites of a Quasi-Zenith Satellite System (QZSS) in addition to GPS satellites during the GPS satellite search process.

More specifically, GPS satellites are on satellite orbits enabling locking onto the satellites all around the world. Japan has started deploying a Quasi-Zenith Satellite System (QZSS) having satellites on orbits remaining over a specific geographical region for a extended period of time. These quasi-zenith satellites transmit the same L1 C/A signal as GPS satellites, use the same center frequency, and can be used as GPS satellites. The GPS processing unit 31A, GPS satellite signal search unit 36A, and GPS satellite tracking unit 37A can therefore also be used to track quasi-zenith satellites.

The Quasi-Zenith Satellite System is a satellite system that uses a combination the quasi-zenith satellites on plural orbital planes so that one satellite is always near the zenith over Japan, and these orbits circle the Earth on a specific inclination (the inclination of the orbital plane to the equatorial plane) on the same period as the rotation of the Earth. Because a quasi-zenith satellite is always near the zenith in Japan, a high precision satellite navigation system that covers substantially 100% of Japan and is not affected by mountains and tall buildings can be provided.

Because a quasi-zenith satellite can only remain at a high latitude position for part of its orbital period, three or more satellites are planned to be placed on the same orbit so that one satellite is always above Japan.

While only one satellite is currently operational, three quasi-zenith satellites and one geostationary satellite are scheduled for launching, and four quasi-zenith satellites are scheduled to join the GPS constellation from 2018. A single quasi-zenith satellite is near the zenith at a high angle of elevation for approximately 8 hours a day, and once the Quasi-Zenith Satellite System of four satellites is operational, three additional GPS satellites will effectively be added from Japan.

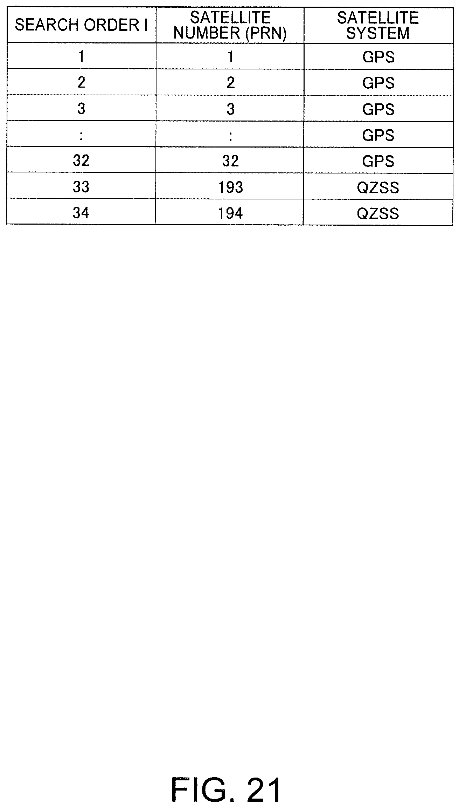

The electronic timepiece 1 according to the fifth embodiment of the invention therefore adds these quasi-zenith satellites to the search targets when searching for GPS satellites as shown in FIG. 21. As a result, the probability of being able to lock onto a quasi-zenith satellite near the zenith increases if the location of the user wearing the electronic timepiece 1 is in a region where signals from quasi-zenith satellites can be received. More specifically, because the possibility of locking onto a quasi-zenith satellite is high when the sensitivity threshold is set to the highest value for the first search, the satellite search process and reception time can be shortened, and current consumption can be reduced.

Furthermore, because the search order of the quasi-zenith satellites is set after the GPS satellites, GPS satellites can be found and locked first and the search process can be completed in a shorter time when the GPS satellite search process is executed in a region where the quasi-zenith satellites cannot be received.

FIG. 21 shows an example in which there are two quasi-zenith satellites, but when three or more quasi-zenith satellites are in service, those quasi-zenith satellites maybe added as search targets. For example, when four quasi-zenith satellites of satellite numbers PRN 193 to 196 are in orbit, quasi-zenith satellites of PRN 193 to 196 may be simply added as 33 to 37 in the GPS satellite search order. Note that the order of the search sequence for quasi-zenith satellites is not limited to numerically by satellite number, and may be random.

When it can be determined based on the positioning information acquired from the previous positioning reception process or the time zone set by the user that the user is in a location where quasi-zenith satellites can be locked, the satellite search may prioritize searching for quasi-zenith satellites before searching for GPS satellites. Because the likelihood of quickly locking onto to a quasi-zenith satellite is high in this event, an efficient satellite search is possible and the reception time is shorter. This is particularly beneficial in a timekeeping reception process that only needs to lock onto one satellite because the reception process ends quickly, contributing to a further reduction in current consumption.

Furthermore, when reception starts from a cold start without knowing orbit information (almanac, ephemeris) enabling quickly finding a satellite in a location where quasi-zenith satellites can be seen, the search time can be shortened and the reception time can be shortened by prioritizing searching for quasi-zenith satellites.

Yet further, when it can be determined based on the positioning information acquired from the previous positioning reception process or the time zone set by the user that the reception process was executed in a location where quasi-zenith satellites cannot be used, the satellite search may be set to not look for quasi-zenith satellites when searching for GPS satellites. Needless searches can be therefore eliminated and increasing the reception time can be prevented because quasi-zenith satellites are not looked for when quasi-zenith satellites cannot be used.

### Variations

The invention is not limited to the embodiments described above, and can be modified and improved in many ways without departing from the scope of the accompanying claims.

For example, the foregoing embodiments search for all GPS satellites or GLONASS satellites until a specific number of satellites is locked, and then searches all of the other type of satellites until the specific number of satellites is locked, but the search may alternate between locking GPS satellites and GLONASS satellites. When alternating the search, the search may switch between GPS satellites and GLONASS satellites one at a time, two at a time, or some other interval.

The GPS reception unit 30A and GLONASS reception unit 30B function exclusively in the foregoing embodiments, but the GPS reception unit 30A (first reception units) and GLONASS reception unit 30B (second reception units) may be driven sequentially.

When the reception units function sequentially, the GLONASS reception unit 30B may be operated after switching the GPS reception unit 30A from the functioning mode to the non-functioning mode, or the GLONASS reception unit 30B may go to the functioning mode immediatelybefore (a specific time before) changing the GPS reception unit 30A from the functioning to the non-functioning mode. More specifically, because time is required for analog circuits to activate, there is a specific delay until current consumption increases when switching the reception units 30A and 30B from the non-functioning to the functioning state. Therefore, if the timing for switching to the functioning state is set with consideration for this time lag, current consumption can be prevented from exceeding a specific level and the required battery capacity can be suppressed even if the other reception unit is operated before the one switches to the non-functioning mode.

When operating the GPS reception unit 30A (first reception units) and GLONASS reception unit 30B (second reception units) sequentially, the search function (GLONASS processing unit 31B, GLONASS satellite signal search unit 36B) of the GLONASS reception unit 30B is preferably switched to the functioning mode after at least switching the search function (GPS processing unit 31A, GPS satellite signal search unit 36A) of the GPS reception unit 30A to the non-functioning mode. Because current consumption is greatest when both GPS satellites 30A and GLONASS satellites 30B are functioning and searching for positioning information satellites 100, the peak current consumption can be reduced by shifting the timing at which their search functions are operating.

Furthermore, the foregoing embodiments have an analog processing unit for each of plural types of GNSS, but a single analog processing unit may be used to receive signals from plural GNSS. More specifically, the first reception unit and the second reception unit of the invention are not limited to discrete analog circuits, and may be embodied by a common analog circuit. In this case, the single analog processing unit can be driven to function exclusively as the GPS analog processing unit 33A when set to receive GPS signals, and to function exclusively as the GLONASS analog processing unit 33B when set to receive GLONASS signals, by controlling a PLL circuit, for example, to set the type of GNSS signal to be received by the single analog processing unit.

However, when a single analog processing unit embodies both analog processing units 33A and 33B, the analog processing unit cannot be optimized for each GNSS and current consumption increases. Separate analog processing units 33A and 33B are therefore preferable as described in the foregoing embodiments.

The foregoing embodiments describe using GPS satellites and GLONASS satellites as examples of first and second types of positioning information satellites, and have a first reception unit and a second reception unit for receiving satellite signals from the different types of satellites, but a third reception unit for finding, locking, and receiving satellite signals from a third type of positioning information satellite may also be used.

For example, to receive BeiDou (China) satellite signals in addition to GPS and GLONASS signals, a third reception unit including a BeiDou processing unit, which is an analog circuit compatible with BeiDou signals, added to the RF unit 31, and a BeiDou satellite signal search unit and a BeiDou satellite tracking unit added to the baseband unit 35, is required.

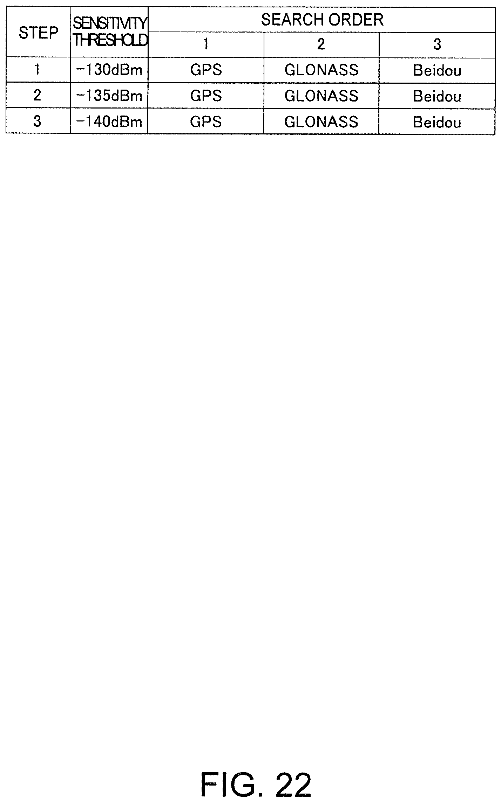

The reception control means 41 also controls searching sequentially for three types of satellites in steps 1 to 3 for setting the sensitivity threshold and searching as shown in FIG. 22.

Because there are more satellites that can potentially be found and locked at the high sensitivity threshold set in step 1 if the number of types of positioning information satellites 100 is increased, reception can be completed in a short time and current consumption can be reduced.

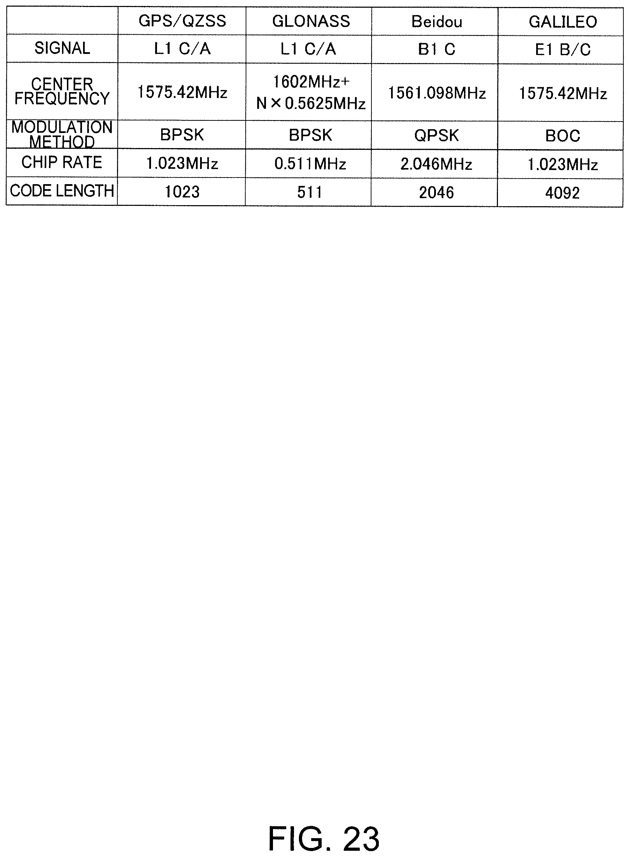

Other GNSS may also be added as other types of positioning information satellites. For example, the embodiments described above describe GPS satellites, GLONASS satellites, BeiDou satellites, and quasi-zenith satellites as examples of positioning information satellites, but the types of positioning information satellites are not limited thereto. As shown in FIG. 23, for example, GPS (United States), Galileo (EU), GLONASS (Russia), and BeiDou (China) are Global Navigation Satellite Systems that are currently operational or in development. Regional Navigation Satellite Systems (RNSS) that are operational or in development include QZSS (Japan), IRNSS (India), DORIS (France), BeiDou (China), as well as geostationary satellites used in satellite-based augmentation systems (SBAS), for example.

Because GPS uses a different center frequency than GLONASS and BeiDou, using completely identical analog processing units in the RF unit 31 for different GNSS is difficult, efficiency drops, and an analog processing unit dedicated to each type of GNSS is preferably provided. However, because GPS, QZSS, and GALILEO operate with the same center frequency of 1575.42 MHz, the same analog processing unit can be used to process signals from each system.

Furthermore, because parameters related to the C/A code differ between GPS and GLONASS, BeiDou, and Galileo, it is difficult for the baseband unit 35 to operate with each system using identical processing units (satellite signal search unit 36 and satellite tracking unit 37), and preferably uses separate processing units. However, because GPS and QZSS signals have identical parameters, GPS and QZSS signals can be processed by the same processing units (satellite signal search unit 36 and satellite tracking unit 37).

Differences in current consumption due to the type of GNSS are described below.

Current consumption by the RF unit 31 depends basically on the frequency received. Because current consumption increases as the frequency increases, current consumption is greatest when receiving GLONASS satellite signals in FIG. 23.

Current consumption by the baseband unit 35 depends basically on the chip rate (code frequency) . Because more processing is required as the chip rate (code frequency) increases, current consumption increases.

Current consumption during the satellite search is the sum of current consumption by the RF unit 31 and the baseband unit 35. Therefore, current consumption by each processing unit differs according to the type of GNSS being received. When searching for plural types of GNSS, searching desirably proceeds sequentially from the search with the lowest current consumption. This is because when searching in a good location with clear access to the sky and a sufficient number of satellites can be locked by the first GNSS search, reception can be completed with low current consumption by ending the satellite search as soon as the sufficient number of satellites is locked. Therefore, if current consumption by the search is 20 mA for GPS, 22 mA for GLONASS, and 24 mA for BeiDou, searching preferably proceeds in the order GPS, GLONASS, BeiDou.

The foregoing embodiments describing searching for plural types of positioning information satellites 100 in both the timekeeping reception process and the positioning reception process, but plural positioning information satellites 100 of only one type may be searched. For example, the search process may look for both GPS satellites and GLONASS satellites in the timekeeping reception process, but look for only GPS satellites or GLONASS satellites in the positioning reception process. Conversely, the search process may look for both GPS satellites and GLONASS satellites in the positioning reception process, but look for only GPS satellites or GLONASS satellites in the timekeeping reception process.

The invention being thus described, it will be obvious that it may be varied in many ways. Such variations are not to be regarded as a departure from the scope of the invention, and all such modifications as would be obvious to one skilled in the art are intended to be included within the scope of the following claims.

## Claims

1. An electronic timepiece (1) comprising:
a satellite signal receiving device (30) that executes a reception process including
a first reception unit (30A) that receives satellite signals transmitted from a first type of positioning information satellite (100); and
a second reception unit (30B) that receives satellite signals transmitted from a second type of positioning information satellite (100);
a time display device that displays time information computed based on information acquired from a satellite signal the first or second reception unit received;
a solar panel (135); and
a storage battery (130) that is charged with power produced by the solar panel;
wherein the first reception unit (30A) and second reception unit (30B) are driven by power stored in the storage battery and function exclusively between a start and an end of the reception process,
wherein the reception process of the electronic timepiece (1) is executed in a cold start mode without locally stored orbit information.

2. The electronic timepiece (1) described in claim 1, wherein:
a positioning information satellite (100) of the first type is a GPS satellite; and
a positioning information satellite (100) of the second type is a GLONASS satellite or BeiDou satellite.

3. The electronic timepiece (1) described in claim 1, wherein:
a positioning information satellite (100) of the first type is a GPS satellite and a quasi-zenith satellite; and
a positioning information satellite (100) of the second type is a GLONASS satellite or BeiDou satellite.

4. The electronic timepiece (1) described in any of claims 1-3, further comprising:
a third reception unit that receives satellite signals transmitted from a third type of positioning information satellite (100);
wherein the first reception unit (30A), second reception unit (30B), and third reception unit function exclusively or sequentially.

5. The electronic timepiece (1) described in any of claims 1-4, wherein:
the types of positioning information satellites (100) are positioning information satellites (100) in which at least one of the satellite signal modulation method and the center frequency of the carrier wave is different.

6. The electronic timepiece (1) described in any of claims 1-5, wherein:
each reception unit has a search function that locks positioning information satellites (100) of the corresponding type; and
the search function of each reception unit operates exclusively.

7. The electronic timepiece (1) described in any of claims 1-6, wherein:
each reception unit has a tracking function that tracks the satellite signal of a locked positioning information satellite; and
each reception unit drives the tracking function exclusively within the period in which one bit of the navigation data message of the satellite signal is transmitted.

8. The electronic timepiece (1) described in any of claims 1-7, wherein:
the current consumption when the reception unit is driven is different for each reception unit.

9. The electronic timepiece (1) described in any of claims 1-8, wherein:
the reception units operate sequentially from the reception unit with the lowest current consumption when the reception unit functions.

10. The electronic timepiece (1) described in any of claims 1-8, further comprising:
a storage unit that stores the type and number of positioning information satellites (100) locked in the last reception process or the positioning information satellites (100) from which satellite signals were successfully received;
wherein the order for operating the reception units is set based on the type and number of positioning information satellites (100) stored in the storage unit.

11. The electronic timepiece (1) described in any of claims 1-10, wherein:
the current consumption of each reception unit is lower when not functioning than when functioning.

12. The electronic timepiece (1) described in any of claims 1-11, wherein:
the reception unit searches for and locks onto a positioning information satellite (100) for which the reception level of the satellite signal is greater than or equal to a set threshold; and
when searching for all positioning information satellites (100) of plural types, the threshold changes and the positioning information satellite (100) search repeats.

13. The electronic timepiece (1) described in claim 12, wherein:
the reception unit lowers the threshold for each search of all positioning information satellites (100) of plural types.

14. The electronic timepiece (1) described in any of claims 1-13, wherein:
the reception unit ends the search when a specific number of positioning information satellites (100) is locked in the process of searching for plural types of positioning information satellites (100).

15. The electronic timepiece (1) described in any of claims 1-14, wherein:
the reception unit executes a timekeeping reception process of locking and receiving a satellite signal from at least one positioning information satellite (100), and computing time information based on information acquired from the received satellite signal.

16. The electronic timepiece (1) described in any of claims 1-15, wherein:
the reception unit executes a positioning reception process of locking and receiving satellite signals from at least four positioning information satellites (100), and computing positioning information based on information acquired from the received satellite signals.

17. The electronic timepiece described in claim 1, further comprising:
a display device that displays the type of positioning information satellite (100) locked onto by the satellite signal receiving device (30).

18. The electronic timepiece described in claim 1 or claim 17, further comprising:
a setting device that sets the type of positioning information satellite (100) searched for by the satellite signal receiving device (30).

19. The electronic timepiece described in any of claims 1, 17-18, further comprising:
a photovoltaic device; and
a storage device that stores power produced by the photovoltaic device.

20. A control method of an electronic time piece (1) comprising
a satellite signal receiving device (30) that executes a reception process including a first reception unit (30A) that receives satellite signals transmitted from a first type of positioning information satellite (100), and a second reception unit (30B) that receives satellite signals transmitted from a second type of positioning information satellite (100),
a time display device that displays time information computed based on information acquired from a satellite signal the first or second reception unit received;
a solar panel (135); and
a storage battery (130) that is charged with power produced by the solar panel;
the method comprising:
driving the first reception unit (30A) and the second reception unit (30B) by power stored in the storage battery and operating the first reception unit (30A) and the second reception unit (30B) to function exclusively between a start and an end of the reception process,
wherein the reception process of the electronic timepiece (1) is executed in a cold start mode without locally stored orbit information.

## Patentansprüche

1. Ein elektronischer Zeitmesser (1) aufweisend:
eine Satellitensignal-Empfangsvorrichtung (30), welche einen Empfangsprozess ausführt, beinhaltend
eine erste Empfangseinheit (30A), welche Satellitensignale empfängt, die von einer ersten Art von Positionierungsinformations-Satellit (100) übermittelt wird; und
eine zweite Empfangseinheit (30B), welche Satellitensignale empfängt, die von einer zweiten Art von Positionierungsinformations-Satellit (100) übermittelt wird;
eine Zeitanzeigevorrichtung, welche Zeitinformation anzeigt, berechnet basierend auf Information erhalten von einem Satellitensignal, welches die erste oder zweite Empfangseinheit empfangen hat;
ein Solarpanel (135); und
eine Speicherbatterie (130), welche mit Energie geladen ist, die durch das Solarpanel erzeugt wurde;
wobei die erste Empfangseinheit (30A) und zweite Empfangseinheit (30B) durch Energie angetrieben werden, die in der Speicherbatterie gespeichert ist, und exklusiv zwischen einem Anfang und einem Ende des Empfangsprozesses betrieben werden,
wobei der Empfangsprozess des elektronischen Zeitmessers (1) in einem Kaltstartmodus ausgeführt wird, ohne lokal gespeicherte Orbit-Information.

2. Der elektronische Zeitmesser (1) beschrieben in Anspruch 1, wobei:
ein Positionierungsinformations-Satellit (100) der ersten Art ein GPS-Satellit ist; und
ein Positionierungsinformations-Satellit (100) der zweiten Art ein GLONASS-Satellit oder ein BeiDou-Satellit ist.

3. Der elektronische Zeitmesser (1) beschrieben in Anspruch 1, wobei:
ein Positionierungsinformations-Satellit (100) der ersten Art ein GPS-Satellit und ein Quasi-Zenith-Satellit ist; und
ein Positionierungsinformations-Satellit (100) der zweiten Art ein GLONASS-Satellit oder ein BeiDou-Satellit ist.

4. Der elektronische Zeitmesser (1), wie in einem der Ansprüche 1-3 beschrieben, weiter aufweisend:
eine dritte Empfangseinheit, welche Satellitensignale empfängt, die von einer dritten Art von Positionierungsinformations-Satellit (100) übermittelt wird;
wobei die erste Empfangseinheit (30A), zweite Empfangseinheit (30B) und dritte Empfangseinheit exklusiv oder sequenziell funktionieren.

5. Der elektronische Zeitmesser (1), wie in einem der Ansprüche 1-4 beschrieben, wobei:
die Arten der Positionierungsinformations-Satelliten (100) Positionierungsinformations-Satelliten (100) sind, bei welchen zumindest eine des Satellitensignal-Modulationsverfahrens und der Zentralfrequenz der Trägerwelle verschieden sind.

6. Der elektronische Zeitmesser (1), wie in einem der Ansprüche 1-5 beschrieben, wobei:
jede Empfangseinheit eine Suchfunktion hat, welche Positionierungsinformations-Satelliten (100) von entsprechender Art verbindet; und
die Suchfunktion von jeder Empfangseinheit exklusiv betrieben wird.

7. Der elektronische Zeitmesser (1), wie in einem der Ansprüche 1-6 beschrieben, wobei:
jede Empfangseinheit eine Tracking-Funktion hat, welche das Satellitensignal von einem verbundenen Positionierungsinformations-Satelliten (100) verfolgt; und
jede Empfangseinheit die Trackingfunktion exklusiv betreibt, innerhalb der Periode, in welcher ein Bit der Navigationsdaten-Nachricht von dem Satellitensignal übermittelt wird.

8. Der elektronische Zeitmesser (1), wie in einem der Ansprüche 1-7 beschrieben, wobei:
der gegenwärtige Verbrauch, wenn die Empfangseinheit betrieben wird, für jede Empfangseinheit verschieden ist.

9. Der elektronische Zeitmesser (1), wie in einem der Ansprüche 1-8 beschrieben, wobei:
die Empfangseinheiten sequenziell betrieben werden, von der Empfangseinheit an, welche den kleinsten Stromverbrauch hat, wenn die Empfangseinheit betrieben wird.

10. Der elektronische Zeitmesser (1), wie in einem der Ansprüche 1-8 beschrieben, weiter aufweisend:
eine Speichereinheit, welche die Art und Anzahl von Positionierungsinformations-Satelliten (100), die in dem letzten Empfangsprozess verbunden wurden, oder die Positionierungsinformations-Satelliten (100), von welchen Satellitensignale erfolgreich empfangen worden sind, speichert;
wobei die Reihenfolge des Betreibens der Empfangseinheiten eingestellt wird, basierend auf der Art und der Anzahl von Positionierungsinformations-Satelliten (100), die in der Speichereinheit gespeichert sind.

11. Der elektronische Zeitmesser (1), wie in einem der Ansprüche 1-10 beschrieben, wobei:
der Stromverbrauch von jeder Empfangseinheit kleiner ist, wenn im Betrieb, als wenn nicht im Betrieb.

12. Der elektronische Zeitmesser (1), wie in einem der Ansprüche 1-11 beschrieben, wobei:
die Empfangseinheit nach einem Positionierungsinformations-Satellit (100) sucht, und diesen verbindet, für welchen das Empfangsniveau des Satellitensignals größer oder gleich einem eingestellten Grenzwert ist; und
während des Suchens nach allen Positionierungsinformations-Satelliten (100) von verschiedenen Arten, sich der Grenzwert ändert, und sich die Positionierungsinformations-Satelliten (100) -Suche wiederholt.

13. Der elektronische Zeitmesser (1), wie in Anspruch 12 beschrieben, wobei:
die Empfangseinheit den Grenzwert für jede Suche nach allen Positionierungsinformations-Satelliten (100) von verschiedenen Arten verringert.

14. Der elektronische Zeitmesser (1), wie in einem der Ansprüche 1-13 beschrieben, wobei:
die Empfangseinheit die Suche beendet, wenn eine bestimmte Anzahl von Positionierungsinformations-Satelliten (100) in dem Prozess des Suchens für mehrere Arten von Positionierungsinformation-Satelliten (100) verbunden sind.

15. Der elektronische Zeitmesser (1), wie in einem der Ansprüche 1-14 beschrieben, wobei:
die Empfangseinheit einen Zeiterfassungs-Empfangsprozess des Verbindens und Empfangens eines Satellitensignals von zumindest einem Positionierungsinformations-Satellit (100), und ein Berechnen von Zeitinformation basierend auf Information erhalten von dem empfangenen Satellitensignal, durchführt.

16. Der elektronische Zeitmesser (1), wie in einem der Ansprüche 1-15 beschrieben, wobei:
die Empfangseinheit einen Positionierungs-Empfangsprozess des Verbindens und Empfangens von Satellitensignalen von zumindest vier Positionierungsinformations-Satelliten (100), und ein Berechnen von Positionierungsinformation basierend auf Information erhalten von den empfangenen Satellitensignalen, durchführt.

17. Der elektronische Zeitmesser (1), wie in Anspruch 1 beschrieben, weiter aufweisend:
eine Anzeigevorrichtung, welche die Art des Positionierungsinformations-Satelliten (100) anzeigt, auf welchen die Satellitensignalempfangsvorrichtung (30) verbunden ist.

18. Der elektronische Zeitmesser (1), wie in Anspruch 1 oder 17 beschrieben, weiter aufweisend:
eine Einstellvorrichtung, welche die Art des Positionierungsinformations-Satellit (100) einstellt, nach dem die Satellitenempfangsvorrichtung (30) sucht.

19. Der elektronische Zeitmesser (1), wie in einem der Ansprüche 1, 17-18 beschrieben, weiter aufweisend:
eine Photovoltaikvorrichtung; und
eine Speichervorrichtung, welche Energie speichert, die durch die Photovoltaikvorrichtung erzeugt wird.

20. Ein Steuerverfahren eines elektronischen Zeitmessers (1) aufweisend:
eine Satellitensignal-Empfangsvorrichtung (30), welche einen Empfangsprozess ausführt, beinhaltend eine erste Empfangseinheit (30A), welche Satellitensignale empfängt, die von einer ersten Art von Positionierungsinformations-Satellit (100) übermittelt wird; und eine zweite Empfangseinheit (30B), welche Satellitensignale empfängt, die von einer zweiten Art von Positionierungsinformations-Satellit (100) übermittelt wird;
eine Zeitanzeigevorrichtung, welche Zeitinformation anzeigt, berechnet basierend auf Information erhalten von einem Satellitensignal, welches die erste oder zweite Empfangseinheit empfangen hat;
ein Solarpanel (135); und
eine Speicherbatterie (130), welche mit Energie geladen ist, die durch das Solarpanel erzeugt wurde;
wobei das Verfahren aufweist:
Antreiben der ersten Empfangseinheit (30A) und der zweiten Empfangseinheit (30B) durch Energie, gespeichert in der Speicherbatterie, und Betreiben der ersten Empfangseinheit (30A) und der zweiten Empfangseinheit (30B) um exklusiv zwischen einem Anfang und einem Ende des Empfangsprozesses zu funktionieren,
wobei der Empfangsprozess des elektronischen Zeitmessers (1) in einem Kaltstartmodus ausgeführt wird, ohne lokal gespeicherte Orbit-Information.

## Revendications

1. Pièce d'horlogerie électronique (1) comprenant :
- un dispositif de réception de signaux satellites (30) qui exécute un processus de réception comprenant
- une première unité de réception (30A) qui reçoit des signaux satellites émis par un premier type de satellite d'informations de localisation (100); et
- une deuxième unité de réception (30B) qui reçoit des signaux satellites émis par un deuxième type de satellite d'informations de localisation (100) ;
- un dispositif d'affichage horaire qui affiche des informations horaires calculées sur la base d'informations acquises à partir d'un signal satellite reçu par la première ou la deuxième unité de réception;
- un panneau solaire (135) ; et
- une batterie de stockage (130) qui est chargée en énergie produite par le panneau solaire ;
- dans lequel la première unité de réception (30A) et la deuxième unité de réception (30B) sont entraînées par de l'énergie stockée dans la batterie de stockage et fonctionnent de manière exclusive entre un début et une fin du processus de réception,
- dans lequel le processus de réception de la pièce d'horlogerie électronique (1) est exécuté dans un mode de démarrage à froid sans informations d'orbite stockées localement.

2. Pièce d'horlogerie électronique (1) selon la revendication 1, dans laquelle :
- un satellite d'informations de localisation (100) du premier type est un satellite GPS; et
- un satellite d'informations de localisation (100) du deuxième type est un satellite GLONASS ou un satellite BeiDou.

3. Pièce d'horlogerie électronique (1) selon la revendication 1, dans laquelle :
- un satellite d'informations de localisation (100) du premier type est un satellite GPS et un satellite quasi-zénith ; et
- un satellite d'informations de localisation (100) du deuxième type est un satellite GLONASS ou un satellite BeiDou.

4. Pièce d'horlogerie électronique (1) selon l'une quelconque des revendications 1-3, comprenant en outre :
- une troisième unité de réception qui reçoit des signaux satellites émis depuis un troisième type de satellite (100) d'informations de localisation ;
- dans lequel la première unité de réception (30A), la deuxième unité de réception (30B) et la troisième unité de réception fonctionnent de manière exclusive ou séquentielle.

5. Pièce d'horlogerie électronique (1) selon l'une quelconque des revendications 1-4, dans laquelle :
- les types de satellites d'informations de localisation (100) sont des satellites d'informations de localisation (100) pour lesquels au moins un du procédé de modulation de signaux satellites et de la fréquence centrale de l'onde porteuse est différent(e).

6. Pièce d'horlogerie électronique (1) selon l'une quelconque des revendications 1-5, dans laquelle :
- chaque unité de réception a une fonction de recherche qui verrouille des satellites d'informations de localisation (100) du type correspondant; et
- la fonction de recherche de chaque unité de réception fonctionne de manière exclusive.

7. Pièce d'horlogerie électronique (1) selon l'une quelconque des revendications 1-6, dans laquelle :
- chaque unité de réception a une fonction de suivi qui suit le signal satellite d'un satellite d'informations de localisation verrouillé; et
- chaque unité de réception entraîne la fonction de suivi exclusivement pendant la période pendant laquelle un bit du message de données de navigation du signal satellite est transmis.

8. Pièce d'horlogerie électronique (1) selon l'une quelconque des revendications 1-7, dans laquelle :
- la consommation de courant lorsque l'unité de réception est entraînée est différente pour chaque unité de réception.

9. Pièce d'horlogerie électronique (1) selon l'une quelconque des revendications 1-8, dans laquelle :
- les unités de réception fonctionnent de manière séquentielle à partir de l'unité de réception avec la consommation de courant la plus faible lorsque l'unité de réception fonctionne.

10. Pièce d'horlogerie électronique (1) selon l'une quelconque des revendications 1-8, comprenant en outre :
- une unité de stockage qui stocke le type et le nombre de satellites d'informations de localisation (100) verrouillés dans le dernier processus de réception ou les satellites d'informations de localisation (100) à partir desquels des signaux satellites ont été reçus avec succès ;
- dans lequel l'ordre de fonctionnement des unités de réception est établi en fonction du type et du nombre de satellites d'informations de localisation (100) mémorisés dans l'unité de stockage.

11. Pièce d'horlogerie électronique (1) selon l'une quelconque des revendications 1-10, dans laquelle :
- la consommation de courant de chaque unité de réception est plus faible lorsqu'elle ne fonctionne pas que lorsqu'elle fonctionne.

12. Pièce d'horlogerie électronique (1) selon l'une quelconque des revendications 1-11, dans laquelle :
- l'unité de réception recherche et verrouille un satellite d'informations de localisation (100) pour lequel le niveau de réception du signal satellite est supérieur ou égal à un seuil déterminé ; et
- lors de la recherche de tous les satellites d'informations de localisation (100) de plusieurs types, le seuil change et la recherche de satellite d'informations de localisation (100) se répète.

13. Pièce d'horlogerie électronique (1) selon la revendication 12, dans laquelle :
- l'unité de réception abaisse le seuil pour chaque recherche de tous les satellites d'informations de localisation (100) de plusieurs types.

14. Pièce d'horlogerie électronique (1) selon l'une quelconque des revendications 1-13, dans laquelle :
- l'unité de réception termine la recherche lorsqu'un nombre spécifique de satellites d'informations de localisation (100) est verrouillé dans le processus de recherche de plusieurs types de satellites d'informations de localisation (100).

15. Pièce d'horlogerie électronique (1) selon l'une quelconque des revendications 1-14, dans laquelle :
- l'unité de réception exécute un processus de réception de chronométrage pour verrouiller et recevoir un signal satellite provenant d'au moins un satellite d'informations de localisation (100), et calculer des informations horaires sur la base d'informations acquises à partir du signal satellite reçu.

16. Pièce d'horlogerie électronique (1) selon l'une quelconque des revendications 1-15, dans laquelle :
- l'unité de réception exécute un processus de réception de localisation pour verrouiller et recevoir des signaux de satellite à partir d'au moins quatre satellites d'informations de localisation (100), et pour calculer des informations de localisation sur la base d'informations acquises à partir des signaux de satellites reçus.

17. Pièce d'horlogerie électronique selon la revendication 1, comprenant en outre :
- un dispositif d'affichage qui affiche le type de satellite d'informations de localisation (100) verrouillé par le dispositif de réception de signaux satellites (30).

18. Pièce d'horlogerie électronique selon la revendication 1 ou la revendication 17, comprenant en outre :
- un dispositif de réglage qui définit le type de satellite d'informations de localisation (100) recherché par le dispositif de réception de signaux satellites (30).

19. Pièce d'horlogerie électronique selon l'une quelconque des revendications 1, 17-18, comprenant en outre :
- un dispositif photovoltaïque; et
- un dispositif de stockage qui stocke l'énergie produite par le dispositif photovoltaïque.

20. Procédé de commande d'une pièce d'horlogerie électronique (1) comprenant
- un dispositif de réception de signaux satellites (30) qui exécute un processus de réception comprenant une première unité de réception (30A) qui reçoit des signaux satellites émis par un premier type de satellite d'informations de localisation (100), et une deuxième unité de réception (30B) qui reçoit des signaux émis à partir par un deuxième type de satellite d'informations de localisation (100),
- un dispositif d'affichage horaire qui affiche des informations horaires calculées sur la base d'informations acquises à partir d'un signal satellite reçu par la première ou la deuxième unité de réception;
- un panneau solaire (135); et
- une batterie de stockage (130) qui est chargée en énergie produite par le panneau solaire;
le procédé comprenant :
- l'entraînement de la première unité de réception (30A) et de la deuxième unité de réception (30B) par de l'énergie stockée dans la batterie de stockage et le fonctionnement de la première unité de réception (30A) et de la deuxième unité de réception (30B) de manière exclusive entre un début et une fin du processus de réception,
- dans lequel le processus de réception de la pièce d'horlogerie électronique (1) est exécuté dans un mode de démarrage à froid sans informations d'orbite stockées localement.
